(19) Europäisches Patentamt
European Patent Office
Office européen des brevets

(11) **EP 4 761 159 A1**

(12) **EUROPEAN PATENT APPLICATION**
published in accordance with Art. 153(4) EPC

(43) Date of publication:
**17.06.2026 Bulletin 2026/25**

(21) Application number: **23948100.5**

(22) Date of filing: **10.08.2023**

(51) International Patent Classification (IPC):
***H04L 5/00*** *(2006.01)*

(52) Cooperative Patent Classification (CPC):
**H04L 5/00**

(86) International application number:
**PCT/CN2023/112367**

(87) International publication number:
**WO 2025/030530 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **XU, Jing**
**Dongguan, Guangdong 523860 (CN)**

(74) Representative: **Grassi, Stefano**
**Bugnion S.p.A.**
**Viale Lancetti, 17**
**20158 Milano (IT)**

(54) **RESOURCE BLOCK COMBINATION DETERMINATION METHOD AND APPARATUS, TERMINAL DEVICE, AND NETWORK DEVICE**

(57)     Embodiments of the present application provide a resource block combination determination method and apparatus, a terminal device, and a network device. The method comprises: on the basis of at least two frequency-domain resources within a first bandwidth, a terminal device determines the size of a resource block combination corresponding to a first-type time domain unit, or the terminal device acquires a first configuration and/or a second configuration, wherein the first configuration is used for configuring the size of the corresponding resource block combination for the first-type time domain unit, and the second configuration is used for configuring the size of a corresponding resource block combination for a second-type time domain unit; the terminal device determines, on the basis of the first configuration, the size of the resource block combination corresponding to the first-type time domain unit and/or determines, on the basis of the second configuration, the size of the resource block combination corresponding to the second-type of time domain unit, wherein the first-type time domain unit is an SBFD time domain unit, and the second-type time domain unit is a non-SBFD time domain unit.

A terminal device determines a resource block combination size corresponding to a first type of time-domain unit based on at least two frequency-domain resources within a first bandwidth, the first type of time-domain unit is a sub-band full duplex (SBFD) time-domain unit

301

**FIG. 3**

EP 4 761 159 A1

**Description**

TECHNICAL FIELD

Embodiments of the present disclosure relate to the technical field of mobile communications, and particularly to a method and apparatus for determining resource block combination, a terminal device, and a network device.

BACKGROUND

The resource block combination size represents the number of physical resource blocks (PRBs) contained in one resource block combination. Currently, the resource block combination size is determined based on at least the bandwidth part (BWP) size. However, for subband non-overlapping full duplex (SBFD) systems, frequency-domain resources of downlink transmission are not the entire BWP, but rather a part of the frequency-domain resources within the BWP. Therefore, the current method for determining resource block combination size is not applicable to the SBFD systems. If the current method for determining resource block combination size is adopted, a larger resource block combination size will be determined, and such a larger resource block combination will lead to a decrease in system efficiency.

SUMMARY

Embodiments of the present disclosure provide a method and an apparatus for determining resource block combination, a terminal device, a network device, a chip, a computer-readable storage medium, a computer program product, and a computer program.

The method for determining resource block combination provided by an embodiment of the present disclosure includes the following operation.

The terminal device determines a resource block combination size corresponding to a first type of time-domain unit based on at least two frequency-domain resources within a first bandwidth, and the first type of time-domain unit is a sub-band full duplex (SBFD) time-domain unit.

The method for determining resource block combination provided by an embodiment of the present disclosure includes the following operations.

The terminal device acquires a first configuration and/or a second configuration, the first configuration is used to configure a resource block combination size corresponding to a first type of time-domain unit, and the second configuration is used to configure a resource block combination size corresponding to a second type of time-domain unit.

The terminal device determines the resource block combination size corresponding to the first type of time-domain unit based on the first configuration and/or determines the resource block combination size corresponding to the second type of time-domain unit based on the second configuration, the first type of time-domain unit is an SBFD time-domain unit and the second type of time-domain unit is a non-SBFD time-domain unit.

The method for determining resource block combination provided by an embodiment of the present disclosure includes the following operation.

The network device performs downlink transmission on a first type time-domain unit. A resource block combination size corresponding to the first type time-domain unit is determined based on at least two frequency-domain resources within a first bandwidth, and the first type time-domain unit is an SBFD time-domain unit.

The method for determining resource block combination provided by an embodiment of the present disclosure includes the following operation.

The network device sends a first configuration and/or a second configuration. The first configuration is used to determine a resource block combination size corresponding to a first type of time-domain unit, and the second configuration is used to determine a resource block combination size corresponding to a second type of time-domain unit, the first type of time-domain unit is an SBFD time-domain unit, and the second type of time-domain unit is a non-SBFD time-domain unit.

The apparatus for determining resource block combination provided by the embodiment of the present disclosure is applied to a terminal device, and the apparatus includes a determining unit.

The determining unit is configured to determine a resource block combination size corresponding to a first type of time-domain unit based on at least two frequency-domain resources within a first bandwidth. The first type of time-domain unit is an SBFD time-domain unit.

The apparatus for determining resource block combination provided by the embodiment of the present disclosure is applied to a terminal device, and the apparatus includes: an acquisition unit and a determining unit.

The acquisition unit is configured to acquire a first configuration used to configure a resource block combination size corresponding to a first type of time-domain unit and/or a second configuration used to configure a resource block combination size corresponding to a second type of time-domain unit.

A determining unit is configured to determine a resource block combination size corresponding to a first type of time-domain unit based on the first configuration and/or determine a resource block combination size corresponding to a second type of time-domain unit based on the second configuration. The first type of time-domain unit is an SBFD time-domain unit and the second type of time-domain unit is a non-SBFD time-domain unit.

The apparatus for determining resource block combination provided by the embodiment of the present disclosure is applied to a network device, and the apparatus includes a sending unit.

The sending unit is configured to perform downlink transmission on a first type time-domain unit, wherein a resource block combination size corresponding to the first type time-domain unit is determined based on at least two frequency-domain resources within a first bandwidth, and the first type time-domain unit is an SBFD time-domain unit.

The apparatus for determining resource block combination provided by the embodiment of the present disclosure is applied to a network device, and the apparatus includes a sending unit.

The sending unit is configured to send a first configuration and/or a second configuration. The first configuration is used to configure a resource block combination size corresponding to a first type of time-domain unit, and the second configuration is used to configure a resource block combination size corresponding to a second type of time-domain unit. The first type of time-domain unit is an SBFD time-domain unit, and the second type of time-domain unit is a non-SBFD time-domain unit.

The terminal device provided by the embodiment of the present disclosure includes a processor and a memory. The memory is used for storing a computer program, and the processor is used for calling and running the computer program stored in the memory to perform the method of determining the resource block combination described above.

The network device provided by the embodiment of the present disclosure includes a processor and a memory for storing a computer program, and the processor invokes and executes the computer program stored in the memory to perform the method for determining resource block combination described above.

The chip provided by the embodiment of the present disclosure is used for implementing the method for determining resource block combination described above.

Specifically, the chip includes a processor for invoking and executing a computer program from a memory to cause a device on which the chip is installed to perform the method for determining resource block combination described above.

The computer-readable storage medium provided by the embodiment of the present disclosure is used for storing a computer program that causes a computer to execute the method for determining resource block combination described above.

The computer program product provided by the embodiment of the present disclosure includes computer program instructions that cause a computer to execute the method for determining resource block combination described above.

The computer program provided by the embodiment of the present disclosure, when is run on the computer, causes the computer to execute the method for determining resource block combination described above.

According to the technical solution of the embodiments of the present disclosure, on the one hand, for the first type of time-domain unit (i.e., the SBFD time-domain unit), the corresponding resource block combination size is determined based on at least two frequency-domain resources within the first bandwidth, and the resource block combination size determined in this method is more suitable for the first type of time-domain unit (i.e., the SBFD time-domain unit). On the other hand, a corresponding resource block combination size is configured for each of the first type of time-domain unit (i.e., the SBFD time-domain unit) and the second type of time-domain unit (i.e., the non-SBFD time-domain unit). For the first type of time-domain unit (i.e., the SBFD time-domain unit), the corresponding resource block combination size can be determined based on its special configuration (i.e., the first configuration). Similarly, for the second type of time-domain unit (i.e., the non-SBFD time-domain unit), the corresponding resource block combination size can be determined based on its special configuration (i.e., the second configuration). With this solution, the method for determining the resource block combination size is enhanced, and the determined resource block combination size is more accurate, thereby ensuring system efficiency.

BRIEF DESCRIPTION OF THE DRAWINGS

The accompanying drawings described herein are intended to provide a further understanding of the present disclosure, and constitute a part of the present disclosure. The schematic embodiments of the present disclosure and the description thereof are intended to explain the present disclosure, and do not constitute an undue limitation of the present disclosure. In the drawings:

FIG. 1 is a schematic diagram of an application scenario according to an embodiment of the present disclosure.
FIG. 2 is a schematic diagram of frequency-domain resources of an SBFD system.
FIG. 3 is a first schematic flowchart of a method for determining resource block combination according to an embodiment of the present disclosure.

FIG. 4 is a second schematic flowchart of a method for determining resource block combination according to an embodiment of the present disclosure.

FIG. 5 is a third schematic flowchart of a method for determining resource block combination according to an embodiment of the present disclosure.

FIG. 6 is a schematic diagram of physical resource group (RBG) division in a first application example according to an embodiment of the present disclosure.

FIG. 7 is a schematic diagram of RBG division in a second application example according to an embodiment of the present disclosure.

FIG. 8 is a schematic diagram of precoding resource block group (PRG) division in a third application example according to an embodiment of the present disclosure.

FIG. 9 is a schematic diagram of sub-band division in a fourth application example according to the embodiment of the present disclosure.

FIG. 10 is a schematic diagram of sub-band division in a fifth application example according to the embodiment of the present disclosure.

FIG. 11 is a schematic diagram of a resource block combination of frequency-domain resources in a sixth application example according to an embodiment of the present disclosure.

FIG. 12 is a first schematic diagram of the structural composition of an apparatus for determining resource block combination according to an embodiment of the present disclosure.

FIG. 13 is a second schematic diagram of the structural composition of an apparatus for determining resource block combination according to an embodiment of the present disclosure.

FIG. 14 is a third schematic diagram of the structural composition of an apparatus for determining resource block combination according to an embodiment of the present disclosure.

FIG. 15 is a fourth schematic diagram of the structural composition of an apparatus for determining resource block combination according to an embodiment of the present disclosure.

FIG. 16 is a schematic structural diagram of the communication device according to an embodiment of the present disclosure.

FIG. 17 is a schematic structural diagram of a chip according to an embodiment of the present disclosure.

FIG. 18 is a schematic block diagram of a communication system according to an embodiment of the present disclosure.


DETAILED DESCRIPTION

The technical solutions in the embodiments of the present disclosure will be described in the following with reference to the accompanying drawings in the embodiments of the present disclosure, and it is apparent that the described embodiments are part of the embodiments of the present disclosure, rather than all the embodiments. Based on the embodiments in the present disclosure, all other embodiments obtained by those skilled in the art without creative efforts fall within the scope of protection of the present disclosure.

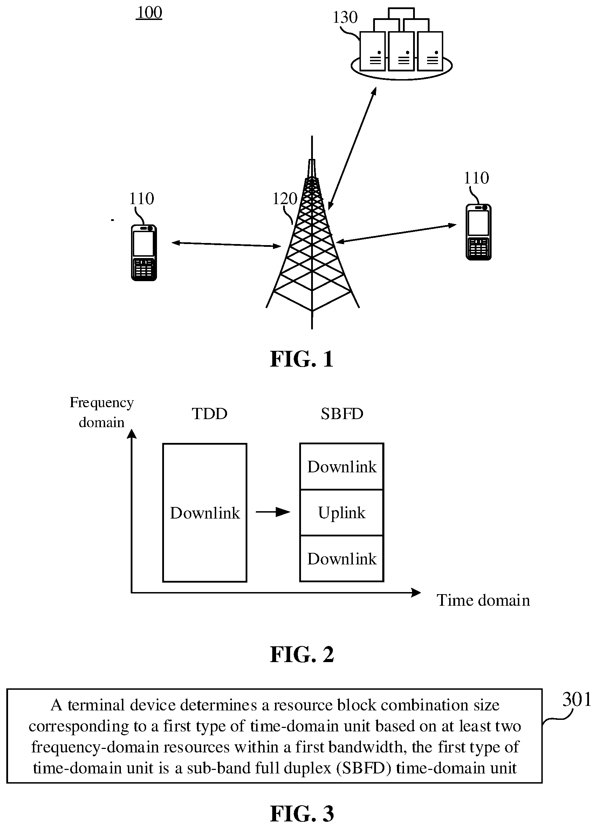

FIG. 1 is a schematic diagram of an application scenario according to an embodiment of the present disclosure.

As illustrated in FIG. 1, the communication system 100 may include a terminal device 110 and a network device 120. The network device 120 may communicate with the terminal device 110 through an air interface. Multi-service transmission is supported between the terminal device 110 and the network device 120.

**It** should be understood that the embodiments of the present disclosure are only illustrated with reference to the communication system 100, but the embodiments of the present disclosure are not limited thereto. That is, the technical solution of the embodiment of the present disclosure can be applied to various communication systems, such as a long term evolution (LTE) system, an LTE time division duplex (TDD), a universal mobile telecommunication system (UMTS), an internet of things (IoT) system, and a narrow band internet of things (NB-IoT) system, enhanced machine-type communications (eMTC) system, 5G communication system (also referred to as new radio (NR) communication system), beyond 5G (B5G) communication system, 6G communication system or future communication system, etc.

**In** the communication system 100 illustrated in FIG. 1, the network device 120 may be an access network device that communicates with the terminal device 110. The access network devices may provide communication coverage for a particular geographic area and may communicate with terminal devices 110 (e.g., UEs) located within that coverage area.

The network device 120 may be an evolutionary node B, eNB, or eNodeB in a long term evolution (LTE) system, a next generation radio access network (NG RAN) device, a base station (gNB) in an NR system, a radio controller in a cloud radio access network (CRAN), or a relay station, an access point, an in-vehicle device, a wearable device, a hub, a switch, a bridge, a router, or a network device in a future evolved public land mobile network (PLMN).

The terminal device 110 may be any terminal device including, but not limited to, terminal devices that are connected to the network device 120 or other terminal devices using a wired or wireless connection.

For example, the terminal device 110 may refer to an access terminal, a user equipment (UE), a subscriber unit, a subscriber station, a mobile station, a mobile station, a remote station, a remote terminal, a mobile device, a user terminal, a terminal, a wireless communication device, a user agent, or a user device. The access terminal may be a cellular telephone, a cordless telephone, a session initiation protocol (SIP) telephone, an internet of thing (IoT) device, a satellite handheld terminal, a wireless local loop (WLL) station, a personal digital assistant (PDA), a handheld device with wireless communication function, a computing device or other processing device connected to a wireless modem, an in-vehicle device, a wearable device, a terminal device in a 5G network, a B5G network, a 6G network, or a terminal device in a future evolution network, or the like.

The terminal device 110 may be used for device-to-device (D2D) communication.

The wireless communication system 100 may further include a core network device 130 that communicates with the base station, and the core network device 130 may be a 5G core (5GC) device, for example, an access and mobility management function (AMF), an authentication server function (AUSF), a User Plane Function (UPF), or a Session Management Function (SMF). Optionally, the core network device 130 may also be an evolved packet core (EPC) device of an LTE network, for example, a session management function + a data gateway (SMF + PGW-C) device of a core network. It should be understood that the SMF + PGW-C may simultaneously implement functions that can be achieved by the SMF and the PGW-C. In the process of network evolution, the core network devices may be called by other names, or a new network entity may be formed by dividing the functions of the core network, which is not limited by the embodiments of the present disclosure.

The various functional units in the communication system 100 may also establish a connection between each other through a next generation network (NG) interface to achieve communication.

For example, the terminal device establishes an air interface connection with the access network device through the NR interface for transmitting user plane data and control plane signaling. The terminal device can establish a control plane signaling connection with the AMF through an NG interface 1 (referred to as N1 for short). An access network device, such as a next generation radio access base station (gNB), can establish a user plane data connection with the UPF through an NG interface 3 (N3 for short). The access network device can establish a control plane signaling connection with the AMF through an NG interface 2 (N2 for short). The UPF can establish a control plane signaling connection with the SMF through an NG interface 4 (N4 for short). The UPF can interact with the data network for user plane data through an NG interface 6 (N6 for short). The AMF may establish a control plane signaling connection with the SMF through the NG interface 11 (N11 for short). The SMF may establish a control plane signaling connection with the PCF through the NG interface 7 (N7 for short).

FIG. 1 exemplarily illustrates one base station, one core network device, and two terminal devices. Optionally, the wireless communication system 100 may include multiple base station devices, and the coverage area of each base station may include other quantities of terminal devices, the embodiment of the present disclosure is not limited thereto.

It should be noted that FIG. 1 only intended to schematically illustrate a system applicable to the present disclosure by way of example; of course, the method shown in the embodiment of the present disclosure may be applied to other systems. Further, the terms "system" and "network" are often used interchangeably herein. The term "and/or" herein only describes an association relationship between association objects, indicating that there may be three relationships, for example, A and/or B, which may indicate three situations in which A exists alone, A and B exist simultaneously, and B exists alone. In addition, the character "/" herein generally indicates that the related objects before and after this character are in an "or" relationship. It should also be understood that the "indication" mentioned in the embodiments of the present disclosure may be a direct indication or an indirect indication, it may also indicates an associated relationship between the related objects. For example, A indicates B, which may mean that A directly indicates B, for example, B can be acquired by A; it may also mean that A indicates B indirectly, for example A indicates C, and B can be acquired through C; it may also mean that there is an association relationship between A and B. It should also be understood that "correspondence" mentioned in the embodiments of the present disclosure may indicate that there is a direct correspondence or indirect correspondence between the two, may indicate that there is a correlation relationship between the two, or may indicate a relationship between indicating and being indicated, configuring and being configured, or the like. It should also be understood that the "predefined" or "predefined rules" mentioned in the embodiments of the present disclosure may be implemented by pre-storing corresponding codes, tables, or other methods that can be used to indicate relevant information in devices (e.g., including terminal devices and network devices), and the present disclosure does not limit specific implementations thereof. For example, "predefined" may refer to be defined in the protocol. It should also be understood that in the embodiment of the present disclosure, the "protocol" may refer to a standard protocol in the field of communication, and may include, for example, an LTE protocol, an NR protocol, and related protocols applied in future communication systems, and the present disclosure is not limited thereto.

In order to facilitate understanding of the technical solutions of the embodiments of the present disclosure, the related technologies of the embodiments of the present disclosure will be described below, and the related technologies described below may be arbitrarily combined with the technical solutions of the embodiments of the present disclosure as options, and all of them belong to the scope of protection of the embodiments of the present disclosure.

1. Uplink subband of downlink symbol/slot.

SBFD is also X division duplex (XDD). SBFD is a new duplex mode, which divides non-overlapping uplink and downlink subbands in a time division duplex (TDD) carrier, and performs uplink transmission and downlink transmission on the uplink subband and downlink subband respectively, and thereby achieving full duplex working mode. In SBFD, since frequency-domain resources corresponding to the same time-domain unit include an uplink subband and a downlink subband, downlink transmission and uplink transmission can be simultaneously performed on different subbands of the same time-domain unit. The SBFD is mainly used on the network device side. Specifically, the network device can simultaneously perform downlink transmission and uplink reception on different sub-bands of the same time-domain unit. The terminal device side still uses TDD, that is, only downlink reception or uplink transmission are supported in the same time-domain unit.

Exemplarily, as illustrated in FIG. 2, in TDD, all frequency-domain resources corresponding to downlink symbols/slots are used for downlink transmission. In SBFD, frequency-domain resources corresponding to downlink symbols/slots are divided into non-overlapping uplink and downlink sub-bands, where the uplink sub-bands are used for uplink transmission and the downlink sub-bands are used for downlink transmission. The downlink transmission here may be transmitting a physical downlink shared channel (PDSCH).

2. Resource block combination

The resource block combination consists of several PRBs. There are many types of resource block combinations, and the meanings of several resource block combinations and the method for determining the corresponding resource block combination size are given below.

1) Resource Block Group (RBG)

RBG is a basic scheduling unit of frequency-domain resource allocation of a data channel, that is, a network device allocates frequency-domain resources of a data channel with RBG as granularity, and the data channel is, for example, a PDSCH or a physical uplink shared channel (PUSCH).

The RBG size represents the number of PRBs contained in one RBG. The RBG size is related to the BWP size and the configuration. The configuration here refers to the configuration by the high-level parameter rbg-Size. There are two configurations of rbg-Size: {config1, config2}, where config1 represents Configuration 1, and config2 represents Configuration 2.

For PDSCH, the configuration path of rbg-Size is: downlink dedicated BWP configuration (BWP-DownlinkDedicated) → PDSCH configuration (PDSCH-Config) → rbg-Size configuration, which can be denoted as BWP-DownlinkDedicated {PDSCH-Config {rbg-Size} }.

For PUSCH, the configuration path of rbg-Size is: uplink dedicated BWP configuration (BWP-UplinkDedicated) → PUSCH configuration (PUSCH-Config) → rbg-Size configuration, which can be recorded as BWP-UplinkDedicated {PUSCH-Config {rbg-Size}}.

For the PUSCH for configuration authorization, the configuration path of rbg-Size is: uplink dedicated BWP configuration (BWP-UplinkDedicated) → configuration of configuration authorization (ConfiguredGrantConfig) → rbg-Size configuration, which can be recorded as BWP-UplinkDedicated {ConfiguredGrantConfig {rbg-Size} }.

The relationship among the RBG size, the BWP size, and configuration can be referred to in Table 1 below.

Table 1

| BWP size (unit in PRB) | RBG size corresponding to configuration 1 (unit in PRB) | RBG size corresponding to configuration 2 (unit in PRB) |
|---|---|---|
| 1 - 36 | 2 | 4 |
| 37 - 72 | 4 | 8 |
| 73 - 144 | 8 | 16 |
| 145 - 275 | 16 | 16 |

2) Precoding Resource Block Group (PRG)

PRG refers to a combination of PRBs using the same precoding, and these combinations of PRBs with the same precoding are used for PDSCH transmission.

The PRG Size represents the number of PRBs contained in one PRG. The determination of PRG Size is related to: a) the UE capability of the terminal device, b) the RRC configuration, and c) the number of consecutive PRBs scheduled by the network device for the terminal device. The UE capability is realized by a downlink dynamic PRB-bundling (dynamicPRB-BundlingDL) parameter for indicating whether or not the terminal device supports a PRG size that indicates PDSCH reception based on downlink control information (DCI). If the network device receives the dynamicPRB-BundlingDL reported by the terminal device, it indicates that the terminal device supports indication of the PRG size received by the PDSCH based on the DCI. The RRC configuration is implemented by a PRB bundling type (prb-BundlingType) parameter, which is used to implement the configuration of PRG size by RRC. The number of consecutive PRBs scheduled by the network device for the terminal device will be compared with (BWP size)/2.

Three configurations of PRG size: {2, 4, wideband} are provided. The specific configuration strategies are as follows.

For PDSCH scheduled by DCI format 1 _ 0, the PRG size is fixedly configured to 2.

For PDSCH scheduled by DCI format 1 _ 1, the PRG size is configured as follows:

A) If the terminal device does not have dynamicPRB-BundlingDL capability, the network device can only use RRC to statically configure PRG size. At this time, prb-BundlingType is staticBundling.

If bundleSize = 4 is configured, PRG size = 4.

If bundleSize = wideband is configured, PRG size = wideband.

BundleSize is a configuration parameter under staticBundling.

B) If the terminal device has dynamicPRB-BundlingDL capability, the network device can 1) use RRC + DCI to dynamically configure the PRG size, or 2) use RRC to statically configure the PRG size.

1) RRC + DCI dynamical configuration of PRG size

In the RRC configuration, prb-BundlingType is dynamicBundling, and bundleSizeSet1 and bundleSizeSet2 can be configured under dynamicBundling.

In the DCI indication, the field of PRB bundling size indicator indicates bundleSizeSet1 or bundleSizeSet2 with one bit. A value of the bit being 1 indicates that bundleSizeSet1 is used, and a value of the bit being 0 indicates that bundleSizeSet2 is used.

BundleSizeSet1 = {n4, wideband, n2-wideband, n4-wideband}; bundleSizeSet2 = {n4, wideband }.

1-1) If the field of PRB bundling size indicator in DCI indicates bundleSizeSet1, then:

PRG size = n4 if the RRC configures bundleSizeSet1 = 4.

PRG size = wideband if RRC configures bundleSizeSet1 = wideband.

If the RRC configures bundleSizeSet1 = n2-wideband, then: if the number of consecutive PRBs scheduled by the network device for the terminal device is > (BWP size)/2, then PRG size = wideband; Otherwise, PRG size = 2.

If the RRC configures bundleSizeSet1 = n4-wideband, then: if the number of consecutive PRBs scheduled by the network device for the terminal device is > (BWP size)/2, then PRG size = wideband; otherwise, PRG size = 4.

1-2) If the field of PRB bundling size indicator in DCI indicates bundleSizeSet2, then:

PRG size = 4 if the RRC configures bundleSizeSet2 = 4.

If the RRC configures bundleSizeSet2 = wideband, then the PRG size = wideband.

2) RRC static configuration of PRG size

In the RRC configuration, prb-BundlingType is staticBundling.

PRG size = 4 if bundleSize = 4 is configured.

PRG size = wideband if bundleSize = wideband is configured.

The bundleSize is a configuration parameter under staticBundling.

C) If a network device does not configure bundleSize (Set) through RRC, the default PRG size = 2.

Note that, when the PRG size is configured as wideband, it means that the PRG size is equal to the number of consecutive PRBs scheduled by the network device for the terminal device, and the frequency-domain resources allocated to the terminal device must be consecutive PRBs, and the same precoding is used on these consecutive PRBs.

3) Subband size

The subband size represents the number of PRBs contained in a subband. The subband size is the granularity of channel state information (CSI) reporting, that is, PRBs having the subband size report CSI information as a whole. The subband size is related to the BWP size and the configuration. The configuration refers to the configuration through the high-level parameter subbandSize. The subbandSize has two configurations: { value1, value2}, where value1 represents a value 1 and value2 represents a value 2. The configuration path of the subbandSize is serving cell configuration (ServingCellConfig) → CSI measurement configuration (CSI-MeasConfig) → CSI reporting configuration (CSI-Report-Config) → subbandSize configuration, which can be recorded as ServingCellConfig { CSI-MeasConfig { CSI-Report-Config { subbandSize} } }.

The relationship among the sub-band size, the BWP size, and the configuration may be referred to Table 2 below. Among them, the sub-band size has two values, corresponding to value 1 and value 2 respectively. Generally, the former value of the two values is value 1 (i.e. value1), and the latter value is value 2 (i.e. value2).

Table 2

| BWP size (unit in PRB) | Subband size (unit in PRB) |
| --- | --- |
| 24 - 72 | 4, 8 |
| 73 - 144 | 8, 16 |
| 145 - 275 | 16, 32 |

Based on the above related art, the RBG size/subband size is determined based on at least the BWP size, however, in the SBFD system, the frequency-domain resource of the downlink transmission is not the entire BWP, but the downlink subband portion of the BWP, that is, the frequency-domain resource size of the downlink transmission is smaller than the BWP size. Therefore, the current method for determining RBG size/sub-band size is not suitable for SBFD system, which will cause the RBG size/sub-band size to be too large, resulting in rough resource allocation/precoding, and reducing system efficiency. Furthermore, although the PRG size can be flexibly configured independently, the PRG size is closely related to the RBG size/subband size. As the RBG size/sub-band size is increased, the PRG size will also be increased, and the increase of PRG size will lead to rough shaping and decrease of transmission efficiency.

Therefore, the following technical solutions according to the embodiments of the present disclosure are proposed. Based on the technical solution of the embodiment of the present disclosure, the efficiency of the SBFD system can be improved by enhancing the method for determining the resource block combination size.

In order to facilitate understanding of the technical solutions of the embodiments of the present disclosure, the technical solutions of the present disclosure will be described in detail below with reference to the specific embodiments. The above related technologies can be arbitrarily combined with the technical solutions of the embodiments of the present disclosure as optional solutions, and all of them belong to the scope of protection of the embodiments of the present disclosure. The present disclosure includes at least some of the following embodiments.

It should be noted that in the embodiment of the present disclosure, a time-domain unit in the SBFD is referred to as an SBFD time-domain unit (that is, a first type of time-domain unit), and includes an SBFD symbol, an SBFD sub-slot, an SBFD slot, or an SBFD sub-frame. In some cases, the SBFD time-domain unit may also be described as a downlink time-domain unit, such as a downlink symbol, a downlink sub-slot, a downlink slot, or a downlink sub-frame, but it should be clarified that the frequency-domain resource corresponding to the downlink time-domain unit is divided into uplink sub-bands and downlink sub-bands. Among them, the number of unlink sub-bands and downlink sub-bands may also be one or more. In addition, the uplink sub-bands and downlink sub-bands may be distributed in multiple ways in the frequency-domain. As one implementation, one uplink sub-band is located between two downlink sub-bands.

It should be noted that in the embodiment of the present disclosure, at least two frequency-domain resources within the first bandwidth may be non-continuous frequency-domain resources. The technical solution of the embodiment of the present disclosure may also be adopted for at least two consecutive frequency-domain resources.

It should be noted that in the embodiment of the present disclosure, a time-domain unit in the TDD is referred to as a non-SBFD time-domain unit (that is, a second type time-domain unit), such as a TDD symbol, a TDD sub-slot, a TDD slot, or a TDD sub-frame. The time-domain unit in the TDD may be a downlink time-domain unit, such as a downlink symbol, a downlink sub-slot, a downlink slot, or a downlink subframe, and frequency-domain resources corresponding to the downlink time-domain unit belong to downlink resources. The time-domain unit in the TDD may also be an uplink time-domain unit, such as an uplink symbol, an uplink sub-slot, an uplink slot, or an uplink sub-frame, and frequency-domain resources corresponding to the uplink time-domain unit are all uplink resources.

It should be noted that in the embodiment of the present disclosure, the resource block combination size may refer to an RBG size, a PRG size, or a subband size. Relevant definitions of the RBG size, the PRG size, and the sub-band size may refer to the descriptions in the aforementioned related technology.

FIG. 3 is a first schematic flowchart of a method for determining resource block combination according to an embodiment of the present disclosure. As illustrated in FIG. 3, the method includes some or all of the following operations.

At block 301: a terminal device determines a resource block combination size corresponding to a first type of time-domain unit based on at least two frequency-domain resources within a first bandwidth, and the first type of time-domain unit is an SBFD time-domain unit.

In some implementations, the resource block combination is an RBG, and accordingly, the resource block combination size is an RBG size. For the related definition of the RBG and the RBG size, reference may be made to the aforementioned related technologies. Specifically, the RBG is a basic scheduling unit of frequency-domain resource allocation of a data channel (such as PDSCH, PUSCH), that is, the network device allocates frequency-domain resources of the data channel with RBG as granularity. The RBG size represents the number of PRBs included in one RBG.

In some other implementations, the resource block combination is a subband, and accordingly, the resource block combination size is a subband size. For the related definition of the subband size, reference may be made to the aforementioned related technologies. Specifically, the subband size represents the number of PRBs included in one subband, and the subband size is the granularity of the CSI report.

In some implementations, the at least two frequency-domain resources may be at least two downlink resources, the at least two downlink resources are used for downlink transmission. The first bandwidth includes one or more uplink resources in addition to the at least two downlink resources, and the one or more uplink resources are used for uplink transmission. It is understood that the first bandwidth includes both downlink resources and uplink resources. The downlink resources may also be described as downlink sub-bands, and the uplink resources may also be described as uplink sub-bands. The distribution of the uplink sub-band and the downlink sub-band within the first bandwidth may have a variety of ways, for example, one uplink sub-band is located in the middle of two downlink sub-bands.

For the first type of time-domain unit (i.e., the SBFD time-domain unit), the corresponding first bandwidth includes both downlink resources and uplink resources. For downlink transmission, the corresponding resource block combination size is determined based on at least two downlink resources within the first bandwidth.

In some other implementations, the at least two frequency-domain resources may be at least two uplink resources, the at least two uplink resources are used for uplink transmission, the first bandwidth includes one or more downlink resources in addition to the at least two uplink resources, and the one or more downlink resources are used for downlink transmission. The distribution of the downlink sub-band and the uplink sub-band within the first bandwidth may have a variety of ways, for example, one downlink sub-band is located in the middle of the two uplink sub-bands.

For the first type of time-domain unit (i.e., the SBFD time-domain unit), the corresponding first bandwidth includes both uplink resources and downlink resources. For uplink transmission, the corresponding resource block combination size is determined based on at least two uplink resources within the first bandwidth.

For the RBG, 1) the RBG is a basic scheduling unit of frequency-domain resource allocation of the PDSCH, i.e., in the case of downlink transmission. Accordingly, the RBG size is determined based on at least two downlink resources within the first bandwidth. 2) The RBG is a basic scheduling unit of frequency-domain resource allocation of the PUSCH, i.e., in the case of uplink transmission. Accordingly, the size of the RBG is determined based on at least two uplink resources within the first bandwidth.

For the sub-band size, the sub-band size serves as the granularity for the CSI reporting. The granularity of the CSI reporting refers to the number of PRBs (i.e., the number of PRBs included in the sub-band size) that are treated as a single unit to report one piece of CSI information. The sub-band size is determined based on at least two downlink resources within the first bandwidth.

In some implementations, the first bandwidth may be a BWP.

In an embodiment of the present disclosure, the terminal device determines a resource block combination size corresponding to a first type of time-domain unit based on a first parameter and a frequency-domain resource size of at least two frequency-domain resources within a first bandwidth, the first parameter is used to indicate one of at least two configurations, and each configuration of the at least two configurations is used to determine a resource block combination size corresponding to a respective frequency-domain resource size.

The following describes the methods for determining the RBG size and the sub-band size in conjunction with two scenarios: one where the resource block combination is RBG, and one where the resource block combination is sub-band.

1) The resource block combination is RBG, and the meaning of RBG may refer to the aforementioned related description. The RBG size is related to the frequency-domain resource size of at least two frequency-domain resources and the first parameter. Here, the first parameter may be a high-layer parameter rbg-size, and rbg-size has two configurations of {config1, config2}, where config1 represents Configuration 1 and config2 represents Configuration 2. The configuration path of the rbg-size can be referred to the description of the aforementioned related technologies.

Exemplarily, the relationship among the RBG size, the frequency-domain resource size of the at least two frequency-domain resources, and the configuration indicated by the first parameter may be referred to in Table 3 below. Based on the relationship illustrated in Table 3, the corresponding RBG size may be determined based on the frequency-domain resource size of at least two frequency-domain resources and the configuration indicated by the first parameter. For example, if the frequency-domain resource size of at least two frequency-domain resources is 72, and the first parameter indicates configuration 1, then the RBG size may be determined to be 4 based on the relationship illustrated in Table 3.

Table 3

| Frequency-domain resource size (unit in PRB) | RBG size corresponding to configuration 1 (unit in PRB) | Configure 2 corresponding RBG size (unit in PRB) |
|---|---|---|
| 1 - 36 | 2 | 4 |
| 37 - 72 | 4 | 8 |
| 73 - 144 | 8 | 16 |
| 145 - 275 | 16 | 16 |

2) The resource block combination is sub-band, and the meaning of sub-bands may refer to the aforementioned related description. The sub-band size is related to the frequency-domain resource size of at least two frequency-domain resources and the first parameter. Here, the first parameter may be a high-level parameter subbandSize, and subbandSize has two configurations of {value1, value2}, where value1 represents a value 1 and value2 represents a value 2. The configuration path of the subbandSize may be referred to the description of the aforementioned related technologies.

Exemplarily, the relationship among the sub-band size, the frequency-domain resource size of the at least two frequency-domain resources, and the configuration indicated by the first parameter may be referred to in Table 4 below, where the sub-band size has two values, which are value 1 and value 2, respectively. The former value of the two values is a value 1, and the latter value is a value 2. Based on the relationship illustrated in Table 4, the corresponding sub-band size may be determined based on the frequency-domain resource size of the at least two frequency-domain resources and the configuration indicated by the first parameter.

Table 4

| Frequency-domain resource size (unit in PRB) | Subband size (unit in PRB) |
|---|---|
| 24 - 72 | 4, 8 |
| 73 - 144 | 8, 16 |
| 145 - 275 | 16, 32 |

In some implementations, the determination of the resource block combination size is further related to a first frequency-domain resource indication field size, that is, the terminal device determines the resource block combination size corresponding to the first type of time-domain unit based on the first parameter, the first frequency-domain resource indication field size, and the frequency-domain resource size of at least two frequency-domain resources within the first bandwidth. A frequency-domain resource indication field size refers to the number of bits occupied by the frequency-domain resource indication field.

Here, the first frequency-domain resource indication field size is determined based on the frequency-domain resource size of the first bandwidth and the first parameter. Specifically, based on the frequency-domain resource size of the first bandwidth and the configuration indicated by the first parameter, a resource block combination size, which is referred to as the reference resource block combination size, may be determined in combination with the Table 1 or Table 2, and M (M is a positive integer) resource block combinations may be obtained by performing resource block combination division in the first bandwidth based on the reference resource block combination size, and then the first frequency-domain resource indication field size is M. A first frequency-domain resource indication field is used to indicate the scheduled resource block combination and/or the unscheduled resource block combination among the M resource block combinations. Specifically, each bit in the first frequency-domain resource indication field corresponds to one resource block combination, and the value of the bit is used to indicate whether the corresponding resource block combination is scheduled, for example, the value of the bit is 1 (or 0) which indicates that the corresponding resource block combination is scheduled, for example, the value of the bit is 0 (or 1) which indicates that the corresponding resource block combination is not scheduled.

Considering that the frequency-domain resource indication field is carried in the DCI, and the terminal device expects that the size of the DCI is fixed or changes little; otherwise, the complexity of blind detection of the DCI by the terminal device will increase. Therefore, the frequency-domain resource indication field size determined based on the resource block combination size corresponding to the first type of time-domain unit needs to be less than or equal to the first frequency-domain resource indication field size. This imposes a restriction on the determination of the resource block combination size corresponding to the first type of time-domain unit. Two methods for determining the resource block

EP 4 761 159 A1

combination size corresponding to the first type of time-domain unit are given below.

The first method is that the resource block combination size corresponding to the first type of time-domain unit is a resource block combination size that meets a first condition in a set of resource block combination sizes, and the first condition is that the frequency-domain resource indication field size determined based on the resource block combination size is less than or equal to the first frequency-domain resource indication field size.

Exemplarily, the set of resource block combination sizes may be a set of RBG sizes {2, 4, 8, 16} as illustrated in Table 3, or may be a set of sub-band sizes {4, 8, 16, 32} as illustrated in Table 4.

Here, the method for determining the corresponding frequency-domain resource indication field size based on the resource block combination size is similar to the method for determining the first frequency-domain resource indication field size described above. Specifically, if N1 (N1 is a positive integer) resource block combinations may be obtained by performing resource block combination division in the first bandwidth based on the resource block combination size, then the frequency-domain resource indication field size is N1. The first condition may be understood as that the frequency-domain resource indication field size N1 determined based on the resource block combination size is less than or equal to the first frequency-domain resource indication field size M.

Further, if multiple resource block combination sizes in the set of resource block combination sizes meet the first condition, then the resource block combination size corresponding to the first type of time-domain unit is a minimum resource block combination size meeting the first condition.

The second method is that if the frequency-domain resource indication field size determined based on the first resource block combination size is less than or equal to the first frequency-domain resource indication field size, then the resource block combination size corresponding to the first type of time-domain unit is the first resource block combination size, and the first resource block combination size is determined based on the frequency-domain resource size of at least two frequency-domain resources and the first parameter; and if the frequency-domain resource indication field size determined based on the first resource block combination size is larger than the first frequency-domain resource indication field size, then the resource block combination size corresponding to the first type of time-domain unit is the second resource block combination size, and the second resource block combination size is determined based on the frequency-domain resource size of the first bandwidth and the first parameter.

Here, the method for determining the frequency-domain resource indication field size based on the first resource block combination size is similar to the method for determining the first frequency-domain resource indication field size described above. Specifically, if N2 (N2 is a positive integer) resource block combinations may be obtained by performing resource block combination division in the first bandwidth based on the first resource block combination size, then the frequency-domain resource indication field size is N2.

The second method may also be understood as follows: if the frequency-domain resource indication field size determined based on the first resource block combination size is less than or equal to the first frequency-domain resource indication field size, then the resource block combination size corresponding to the first type of time-domain unit is determined based on the frequency-domain resource size of at least two frequency-domain resources and the first parameter; and if the frequency-domain resource indication field size determined based on the first resource block combination size is larger than the first frequency-domain resource indication field size, then the resource block combination size corresponding to the first type of time-domain unit is determined based on the frequency-domain resource size of the first bandwidth and the first parameter.

Exemplarily, based on the relationship illustrated in Table 3 or Table 4, the corresponding resource block combination size may be determined based on the frequency-domain resource size of at least two frequency-domain resources and the configuration indicated by the first parameter.

Exemplarily, based on the relationship illustrated in Table 1 or Table 2, the corresponding resource block combination size may be determined based on the frequency-domain resource size of the first bandwidth and the configuration indicated by the first parameter.

In an embodiment of the present disclosure, the terminal device determines a size of each resource block combination within the first bandwidth based on the size of the resource block combination corresponding to the first type of time-domain unit. In other words, the terminal device performs resource block combination division within the first bandwidth based on the resource block combination size corresponding to the first type of time-domain unit.

In some implementations, the terminal device determines the size of each resource block combination within the first bandwidth based on the first serial number, the resource block combination size corresponding to the first type of time-domain unit, and the frequency-domain resource size of at least two frequency-domain resources. The first serial number is a serial number corresponding to the first PRB within the first bandwidth.

1) The method for determining the size of the first resource block combination within the first bandwidth is as follows.

The size of the first resource block combination within the first bandwidth is determined based on the resource block combination size corresponding to the first serial number and the first type of time-domain unit.

Exemplarily, the resource block combination size corresponding to the first type of time-domain unit is P, and the terminal device performs resource block combination division within the first bandwidth based on P, wherein the size of the divided resource block combination is denoted as P', and the size P' of the first resource block combination within the first bandwidth is determined based on the following formula:

$$P' = P - N_{BWP}^{start} \bmod P \qquad (1)$$

$N_{BWP}^{start}$ represents the serial number corresponding to the first PRB within the first bandwidth, and mod is a modulo operation.

2) The method for determining a size of a last resource block combination within the first bandwidth is as follows.

If the first value is not equal to 0, the size of the last resource block combination within the first bandwidth is equal to the first value. Alternatively, if the first value is equal to 0, the size of the last resource block combination within the first bandwidth is equal to the resource block combination size corresponding to the first type of time-domain unit. The first value is determined based on the first serial number, the resource block combination size corresponding to the first type of time-domain unit, and the frequency-domain resource size of the first bandwidth.

Exemplarily, the resource block combination size corresponding to the first type of time-domain unit is P, and the terminal device performs resource block combination division within the first bandwidth based on P, the size of the divided resource block combination is denoted as P', and the size P' of the last resource block combination within the first bandwidth is determined based on the following formula:

$$\text{If } \left(N_{BWP}^{start} + N_{BWP}^{size}\right) \bmod P \neq 0, \text{ then } P' = \left(N_{BWP}^{start} + N_{BWP}^{size}\right) \bmod P;$$
$$\text{Otherwise, } P' = P; \qquad (2)$$

$N_{BWP}^{start}$ represents the serial number corresponding to the first PRB within the first bandwidth, and $N_{BWP}^{size}$ represents the frequency-domain resource size of the first bandwidth, i.e., the number of PRBs included in the first bandwidth.

3) A size of an intermediate resource block combination within the first bandwidth is determined by the following method.

The size of the intermediate resource block combination within the first bandwidth is equal to the resource block combination size corresponding to the first type of time-domain unit.

Exemplarily, the resource block combination size corresponding to the first type of time-domain unit is P, and the terminal device performs resource block combination division within the first bandwidth based on P, the size of the divided resource block combination is denoted as P', and the size P' of the intermediate resource block combination within the first bandwidth is determined based on the following formula:

$$P' = P \qquad (3)$$

After the size of each resource block combination within the first bandwidth is determined based on the above solution, the resource block combination division may be performed within the first bandwidth based on the determined size.

In some implementations, if some PRBs in the first resource block combination within the first bandwidth do not belong to the above-mentioned frequency-domain resource (which may be any one of the at least two frequency-domain resources), the first resource block combination is adjusted to include only some PRBs belonging to the above-mentioned frequency-domain resource.

Here, the first resource block combination may be the first resource block combination of frequency-domain resources or the last resource block combination of frequency-domain resources.

Exemplarily, at least two frequency-domain resources within the first bandwidth include a first downlink sub-band and a second downlink sub-band with an uplink sub-band therebetween. After the resource block combination division is performed within the first bandwidth, N resource block combinations may be obtained. As a first case, for the last resource block combination of the first downlink sub-band, if some PRBs in the resource block combination do not belong to the first downlink sub-band, then the resource block combination is adjusted to include only the PRBs belonging to the first downlink sub-band. As a second case, for the first resource block combination of the second downlink sub-band, if some PRBs in the resource block combination do not belong to the second downlink sub-band, then the resource block combination is adjusted to include only the PRBs belonging to the second downlink sub-band.

In some implementations, N resource block combinations may be obtained after performing the resource block combination division within the first bandwidth, and K resource block combinations among the N resource block combinations fall into the above-mentioned frequency-domain resource (the frequency-domain resource may refer to any one of the at least two frequency-domain resources). Among the K resource block combinations, there may be some PRBs in one or more resource block combinations (referred to as first resource block combinations) that do not belong to the above-mentioned frequency-domain resource, and in this case, the first resource block combinations only include PRBs belonging to the frequency-domain resources.

Based on the above-described technical solution of the embodiments of the present disclosure, for the first type of time-domain unit (that is, the SBFD time-domain unit), the corresponding resource block combination size is determined based on at least two frequency-domain resources within the first bandwidth instead of the first bandwidth, thereby enhancing the method for determining the resource block combination size, and the resource block combination size determined by this method is more accurate for the first type of time-domain unit (that is, the SBFD time-domain unit).

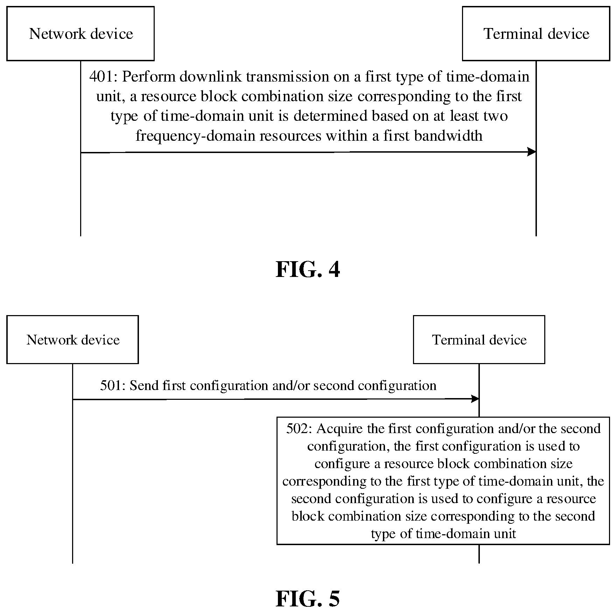

FIG. 4 is a second schematic flowchart of a method for determining resource block combination according to an embodiment of the present disclosure, and as illustrated in FIG. 4, the method includes some or all of the following operations.

Al block 401: the network device performs downlink transmission on a first type time-domain unit, the terminal device receives the downlink transmission on the first type time-domain unit, the resource block combination size corresponding to the first type time-domain unit is determined based on at least two frequency-domain resources within a first bandwidth, and the first type time-domain unit is an SBFD time-domain unit.

In some implementations, the resource block combination is an RBG, and accordingly, the resource block combination size is an RBG size. For the related definitions of the RBG and the RBG size, reference may be made to the aforementioned related technologies. Specifically, the RBG is a basic scheduling unit of frequency-domain resource allocation of a data channel (such as PDSCH), that is, the network device allocates frequency-domain resources of the data channel with RBG as granularity. The RBG size represents the number of PRBs included in one RBG.

In some other implementations, the resource block combination is a subband, and accordingly, the resource block combination size is a subband size. For the related definition of the subband size, reference may be made to the aforementioned related technologies. Specifically, the subband size represents the number of PRBs included in one subband, and the subband size is the granularity of the CSI report.

In some implementations, the at least two frequency-domain resources may be at least two downlink resources, the at least two downlink resources are used for downlink transmission. The first bandwidth includes one or more uplink resources in addition to the at least two downlink resources, and the one or more uplink resources are used for uplink transmission. It is understood that the first bandwidth includes both downlink resources and uplink resources. The downlink resources may also be described as downlink sub-bands, and the uplink resources may also be described as uplink sub-bands. The distribution of the uplink sub-band and the downlink sub-band within the first bandwidth may have a variety of ways, for example, one uplink sub-band is located in the middle of two downlink sub-bands.

For the first type of time-domain unit (i.e., the SBFD time-domain unit), the corresponding first bandwidth includes both downlink resources and uplink resources. For downlink transmission, the corresponding resource block combination size is determined based on at least two downlink resources within the first bandwidth. For the RBG, the RBG size is determined based on at least two downlink resources within the first bandwidth. For the sub-band size, the sub-band size is determined based on at least two downlink resources within the first bandwidth.

In an embodiment of the present disclosure, the network device performs downlink transmission on the first type of time-domain unit. Specifically, the network device performs downlink transmission on at least two frequency-domain resources corresponding to the first type of time-domain unit. Correspondingly, the terminal device receives downlink transmission on the first type of time-domain unit. Specifically, the terminal device receives downlink transmission on at least two frequency-domain resources corresponding to the first type of time-domain unit.

In some implementations, the downlink transmission is for transmitting a PDSCH, the network device transmits the PDSCH on at least two frequency-domain resources corresponding to the first type of time-domain unit. Accordingly, the terminal device receives the PDSCH on at least two frequency-domain resources corresponding to the first type of time-domain unit.

In some implementations, the downlink transmission is for transmitting a downlink reference signal, which may be a synchronization signal and PBCH block (SSB), a channel state information reference signal (CSI-RS), or the like. The downlink reference signal is used for CSI reporting by the terminal device. The network device transmits the downlink reference signal on at least two frequency-domain resources corresponding to the first type of time-domain unit, and correspondingly, the terminal device receives the downlink reference signal on at least two frequency-domain resources corresponding to the first type of time-domain unit.

In an embodiment of the present disclosure, a resource block combination size corresponding to a first type of time-domain unit is determined based on a first parameter and frequency-domain resource size of at least two frequency-domain resources within a first bandwidth, the first parameter is used to indicate one of at least two configurations, and each of the at least two configurations is used to determine a resource block combination size corresponding to a respective frequency-domain resource size. In some implementations, a resource block combination size corresponding to a first type of time-domain unit is determined based on a first parameter, a first frequency-domain resource indication field size, and frequency-domain resource size of at least two frequency-domain resources within the first bandwidth, and the first frequency-domain resource indication field size is determined based on a frequency-domain resource size of the first bandwidth and the first parameter.

Here, the method for determining resource block combination size corresponding to the first type of time-domain unit may be referred to the description related to FIG. 3, and the description related to the method for determining resource block combination size corresponding to the first type of time-domain unit in FIG. 3 may be referred to here.

In some implementations, the size of each resource block combination within the first bandwidth is determined based on the size of the resource block combination corresponding to the first type of time-domain unit.

Here, the method for determining a size of each resource block combination within the first bandwidth may be referred to the above description related to FIG. 3, and the description related to the method for determining the size of each resource block combination within the first bandwidth in FIG. 3 may be referred to here.

FIG. 5 is a third schematic flowchart of a method for determining resource block combination according to an embodiment of the present disclosure, and as illustrated in FIG. 5, the method includes some or all of the following operations.

At block 501: the network device sends a first configuration and/or a second configuration.

At block 502: The terminal device acquires the first configuration and/or the second configuration, the first configuration is used to configure a resource block combination size corresponding to the first type of time-domain unit, and the second configuration is used to configure a resource block combination size corresponding to the second type of time-domain unit.

Here, the network device configures a corresponding resource block combination size for each of the first type time-domain unit and the second type time-domain unit through different configurations, respectively.

In some implementations, the resource block combination is an RBG. The first configuration may be configured by the high-level parameter rbg-size1, and the configuration of rbg-size1 is { config1 }. The second configuration may be configured by the high-level parameter rbg-size2, and the configuration of rbg-size2 is {config2}, where config1 represents Configuration 1, and config2 represents Configuration 2.

For example, the relationship among the RBG size, the frequency-domain resource size of the first bandwidth and the first configuration may be referred to in Table 5-1 below. Based on the relationship illustrated in Table 5-1, the corresponding RBG size may be determined based on the frequency-domain resource size of the first bandwidth and the first configuration.

Table 5-1

| Frequency-domain resource size (unit in PRB) | RBG size (first configuration) (unit in PRB) |
|---|---|
| 1 - 36 | 2 |
| 37 - 72 | 4 |
| 73 - 144 | 8 |
| 145 - 275 | 16 |

Exemplarily, the relationship among the RBG size, the frequency-domain resource size of the first bandwidth, and the second configuration may be referred to in Table 5-2 below. Based on the relationship illustrated in Table 5-2, the corresponding RBG size may be determined based on the frequency-domain resource size of the first bandwidth and the second configuration.

Table 5-2

| Frequency-domain resource size (unit in PRB) | RBG size (second configuration) (unit in PRB) |
|---|---|
| 1 - 36 | 4 |
| 37 - 72 | 8 |
| 73 - 144 | 16 |
| 145 - 275 | 16 |

**In** some implementations, the resource block combination is sub-band, and the first configuration may be configured by the higher layer parameter subbandSize1, and the configuration of subbandSize1 is {value1}, and the second configuration may be configured by the higher layer parameter subbandSize2, and the configuration of subbandSize2 is {value2}, where value1 represents a value 1 and value2 represents a value 2.

For example, the relationship among the sub-band size, the frequency-domain resource size of the first bandwidth and the first configuration may be referred to in Table 6-1 below. Based on the relationship illustrated in Table 6-1, the corresponding sub-band size may be determined based on the frequency-domain resource size of the first bandwidth and the first configuration.

Table 6-1

| Frequency-domain resource size (unit in PRB) | Subband size (First Configuration) (unit in PRB) |
|---|---|
| 24 - 72 | 4 |
| 73 - 144 | 8 |
| 145 - 275 | 16 |

Exemplarily, the relationship among the sub-band size, the frequency-domain resource size of the first bandwidth, and the second configuration may be referred to in Table 6-2 below. Based on the relationship illustrated in Table 6-2, the corresponding sub-band size may be determined based on the frequency-domain resource size of the first bandwidth and the second configuration.

Table 6-2

| Frequency-domain resource size (unit in PRB) | Subband size (second configuration) (unit in PRB) |
|---|---|
| 24 - 72 | 8 |
| 73 - 144 | 16 |
| 145 - 275 | 32 |

In some implementations, the resource block combination is PRG, the first configuration may be configured by the higher layer parameter PRG size1, and the configuration of PRG size1 is {2}. The second configuration may be configured by the higher layer parameter PRG size2, and the configuration of PRG size2 is {4}.

At block 502: the terminal device determines a resource block combination size corresponding to the first type of time-domain unit based on the first configuration and/or determines a resource block combination size corresponding to the second type of time-domain unit based on the second configuration, where the first type of time-domain unit is an SBFD time-domain unit and the second type of time-domain unit is a non-SBFD time-domain unit.

In some implementations, the resource block combination is RBG or subband. The terminal device determines the resource block combination size corresponding to the first type of time-domain unit based on the frequency-domain resource size of the first bandwidth and the first configuration. Additionally or alternatively, the terminal device determines the resource block combination size corresponding to the second type of time-domain unit based on the frequency-domain resource size of the first bandwidth and the second configuration.

Exemplarily, the terminal device may determine the RBG size corresponding to the first type of time-domain unit based on the first configuration illustrated in Table 5-1 and the frequency-domain resource size of the first bandwidth. The terminal device may determine the RBG size corresponding to the second type of time-domain unit based on the second configuration illustrated in Table 5-2 and the frequency-domain resource size of the first bandwidth.

Exemplarily, the terminal device may determine the sub-band size corresponding to the first type of time-domain unit based on the first configuration illustrated in Table 6-1 and the frequency-domain resource size of the first bandwidth. The terminal device may determine the subband size corresponding to the second type of time-domain unit based on the second configuration illustrated in Table 6-2 and the frequency-domain resource size of the first bandwidth.

In some implementations, the resource block combination is PRG, and the terminal device directly determines the resource block combination size corresponding to the first type of time-domain unit based on the first configuration. Additionally or alternatively, the terminal device directly determines the resource block combination size corresponding to the second type of time-domain unit based on the second configuration.

In the embodiment of the present disclosure, the terminal device determines the size of each resource block combination within the first bandwidth based on the resource block combination size corresponding to the first type of time-domain unit. Additionally or alternatively, the terminal device determines the size of each resource block combination within the first bandwidth based on the resource block combination size corresponding to the second type of time-domain unit. In other words, the terminal device performs the resource block combination division within the first bandwidth based on the resource block combination size corresponding to the first type of time-domain unit. Additionally or alternatively, the terminal device performs the resource block combination division within the first bandwidth based on the resource block combination size corresponding to the second type of time-domain unit.

In some implementations, the terminal device determines the size of each resource block combination within the first bandwidth based on the first serial number, the resource block combination size corresponding to the first type of time-domain unit, and the frequency-domain resource size of at least two frequency-domain resources. The first serial number is a serial number corresponding to the first PRB within the first bandwidth.

1) The size of the first resource block combination within the first bandwidth is determined by the following method.

The size of the first resource block combination within the first bandwidth is determined based on the first serial number, and the resource block combination size corresponding to and the first type of time-domain unit.

Exemplarily, the size of the resource block combination corresponding to the first type of time-domain unit is P, and the terminal device performs a resource block combination division within the first bandwidth based on P, where the size of the divided resource block combination is denoted as P', and the size P' of the first resource block combination within the first bandwidth is determined based on the above formula (1).

2) The size of the last resource block combination within the first bandwidth is determined by the following method.

If the first value is not equal to 0, the size of the last resource block combination of the first bandwidth is equal to the first value. Alternatively, if the first value is equal to 0, the size of the last resource block combination within the first bandwidth is equal to the size of the resource block combination corresponding to the first type of time-domain unit. The first value is determined based on the first serial number, the resource block combination size corresponding to the first type of time-domain unit, and the frequency-domain resource size of the first bandwidth.

For example, the size of the resource block combination corresponding to the first type of time-domain unit is P, and the terminal device performs the resource block combination division within the first bandwidth based on P, where the size of the divided resource block combination is denoted as P', and the size P' of the last resource block combination within the first bandwidth is determined based on the above formula (2).

3) The size of the intermediate resource block combination within the first bandwidth is determined by the following method.

The size of the intermediate resource block combination within the first bandwidth is equal to the size of the resource block combination corresponding to the first type of time-domain unit.

Exemplarily, the size of the resource block combination corresponding to the first type of time-domain unit is P, and the terminal device performs the resource block combination division within the first bandwidth based on P, where the size of the divided resource block combination is denoted as P', and the size P' of the intermediate resource block combination within the first bandwidth is determined based on the formula (3).

After the size of each resource block combination within the first bandwidth is determined by the above solution, the resource block combination division may be performed within the first bandwidth based on the determined size.

In some implementations, if some PRBs in the first resource block combination within the first bandwidth do not belong to the frequency-domain resource (which may be any one of the at least two frequency-domain resources), then the first resource block combination is adjusted to include only some PRBs belonging to the frequency-domain resource.

Here, the first resource block combination may be the first resource block combination of frequency-domain resources or the last resource block combination of frequency-domain resources.

Exemplarily, the at least two frequency-domain resources within the first bandwidth include a first downlink sub-band and a second downlink sub-band with an uplink sub-band therebetween. After the resource block combination division is performed within the first bandwidth, N resource block combinations may be obtained. As a first case, for the last resource block combination of the first downlink sub-band, if some PRBs in the resource block combination do not belong to the first downlink sub-band, then the resource block combination is adjusted to include only the PRBs belonging to the first downlink sub-band. As a second case, for the first resource block combination of the second downlink sub-band, if some PRBs in the resource block combination do not belong to the second downlink sub-band, then the resource block combination is adjusted to include only the PRBs belonging to the second downlink sub-band.

Based on the above technical solution of the embodiment of the present disclosure, a corresponding resource block combination size is configured for each of the first type time-domain unit (i.e., the SBFD time-domain unit) and the second type time-domain unit (i.e., the non-SBFD time-domain unit). For the first type time-domain unit (i.e., non-SBFD time-domain unit), the corresponding resource block combination size may be determined based on its special configuration (i.e., the first configuration). Similarly, for the second type time-domain unit (i.e., the non-SBFD time-domain unit), the corresponding resource block combination size may be determined based on its special configuration (i.e., the second configuration). Thus, the method for determining resource block combination size is enhanced, and the resource block combination size determined in this way is also accurate for the first type of time-domain unit (i.e., the SBFD time-domain unit).

The technical solutions of the embodiments of the present disclosure will be described with reference to specific application examples in the following.

Application Example 1

In this application example, the resource block combination is RBG, the first bandwidth is BWP, and the at least two frequency-domain resources are two downlink sub-bands.

An uplink sub-band is arranged in the middle position of the BWP. Accordingly, two downlink sub-bands are formed on both sides of the uplink sub-band. The BWP includes 72 PRBs, of which one uplink sub-band includes 36 PRBs and two downlink sub-bands each include 18 PRBs.

The RBG size is determined based on the frequency-domain resource size (or the sum of bandwidths) of the two downlink subbands and the configuration indicated by the first parameter rbg-size. Assuming that the configuration indicated by the first parameter rbg-size is {config1} and the frequency-domain resource size of the two downlink subbands are 18+18=36 PRBs, then combined with the table 3, the RBG size may be determined as: P=2, here P represents the RBG size. It should be noted that the configuration indicated by the first parameter RBG-size here applies to the determination of both the subband size corresponding to the SBFD time-domain unit, and the subband size corresponding to the non-SBFD time-domain unit. The RBG size corresponding to the SBFD time-domain unit is determined based on the frequency-domain resource size (or the sum of bandwidths) of the two downlink subbands and the configuration indicated by the first parameter rbg-size, combined with the Table 3. The RBG size corresponding to the non-SBFD time-domain unit is determined based on the frequency-domain resource size of BWP and the configuration indicated by the first parameter rbg-size, combined with the Table 3.

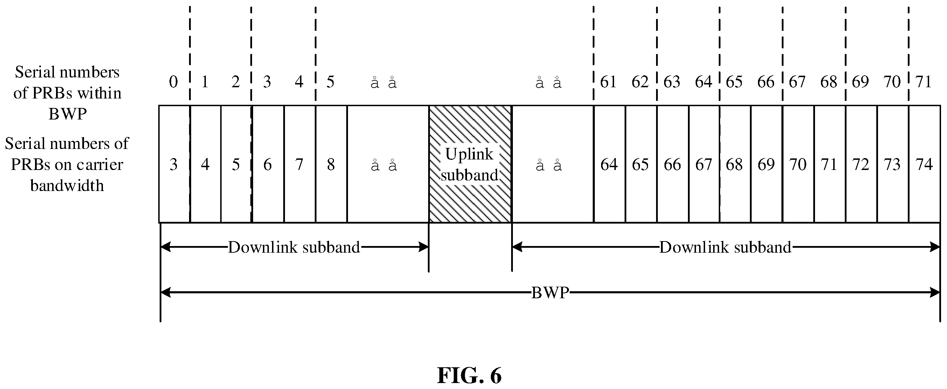

As illustrated in FIG. 6, after the RBG size is determined to be P = 2, the RBG division may be performed on the BWP based on the RBG size. The dashed lines in FIG. 6 represent the RBG division boundaries, and P' continuous PRBs on the BWP are divided into one RBG. The value of P' may be determined as follows.

1) The size P' of the first RBG in the BWP is determined based on the formula (1), specifically:

$$P' = P - N_{BWP}^{start} \bmod P = 2 - 3 \bmod 2 = 1$$

Where $N_{BWP}^{start}$ represents the serial number 3 corresponding to the first PRB in the BWP.

2) The size P' of the last RBG in the BWP is determined based on the formula (2).

Specifically, because $\left(N_{BWP}^{start} + N_{BWP}^{size}\right) \bmod P = (3 + 72) \bmod 2 \neq 0$

So,

$$P' = \left(N_{BWP}^{start} + N_{BWP}^{size}\right) \bmod P = (3 + 72) \bmod 2 = 1$$

Where $N_{BWP}^{start}$ represents the serial number 3 corresponding to the first PRB in the BWP, and $N_{BWP}^{size}$ represents the number 72 of PRBs included in the BWP.

3) The size P' of the intermediate RBG in the BWP is determined based on the formula (3), which is: P' = P = 2.

After determining the size of P', the RBG division may be performed on the BWP accordingly.

Application Example 2

In this application example, the resource block combination is RBG, the first bandwidth is BWP, and at least two frequency-domain resources are two downlink sub-bands.

An uplink sub-band is arranged in the middle position of the BWP. Accordingly, two downlink sub-bands are formed on both sides of the uplink sub-band. The BWP includes 72 PRBs, of which one uplink sub-band includes 36 PRBs, and both downlink sub-bands each include 18 PRBs.

The terminal device acquires a first configuration and a second configuration, the first configuration is a configuration for an SBFD time-domain unit, and the second configuration is a configuration for a non-SBFD time-domain unit. The first configuration may be configured by the high-level parameter rbg-size1, and the configuration of rbg-size1 is {config1}. The second configuration may be configured by the high-level parameter rbg-size2, and the configuration of rbg-size2 is {config2}. The config1 represents Configuration 1 and the config2 represents Configuration 2.

Based on the frequency-domain resource size (72 PRBs) of the BWP and the first configuration {config1}, the terminal device may determine that the RBG size corresponding to the SBFD time-domain unit is P = 4 in combination with the Table 5-1.

Based on the frequency-domain resource size (72 PRBs) of the BWP and the second configuration {config2}, the terminal device may determine that the RBG size corresponding to the non-SBFD time-domain unit is P = 8 in combination with the Table 5-2.

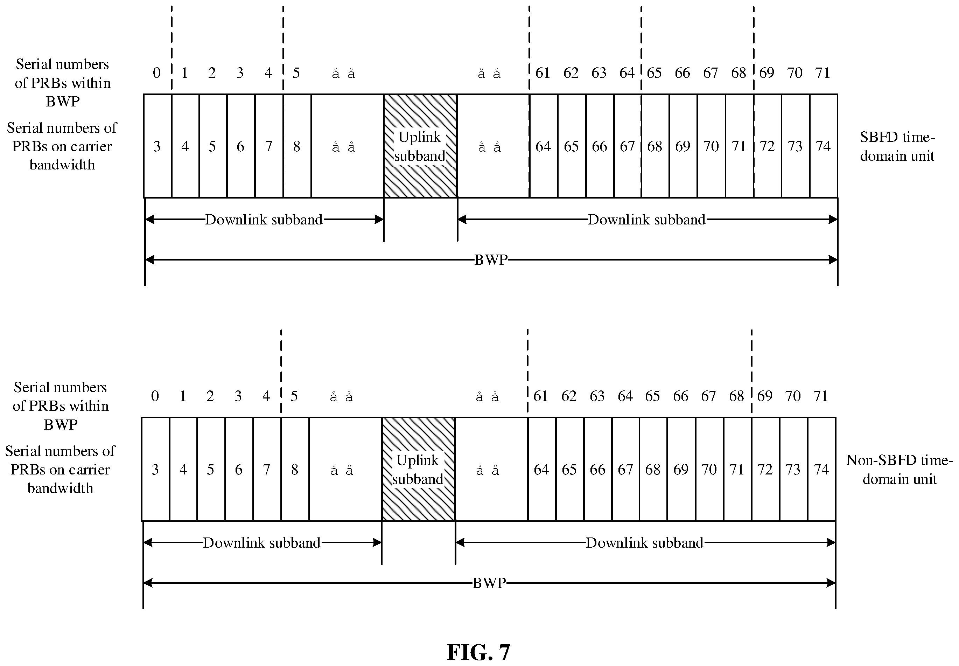

For the SBFD time-domain unit, as illustrated in FIG. 7, after the size of the RBG is determined to be P = 4, the RBG division may be performed on the BWP based on the RBG size. The dashed lines in FIG. 7 represent the RBG division boundaries, and the continuous P' PRBs on the BWP are divided into one RBG. The value of P' may be determined as follows.

1) The size P' of the first RBG in the BWP is determined based on the formula (1), specifically:

$$P' = P - N_{BWP}^{start} \bmod P = 4 - 3 \bmod 4 = 1$$

Where $N_{BWP}^{start}$ represents the serial number 3 corresponding to the first PRB in the BWP.

2) The size P' of the last RBG in the BWP is determined based on the formula (2).

Specifically, because $\left(N_{BWP}^{start} + N_{BWP}^{size}\right) \bmod P = (3 + 72) \bmod 4 \neq 0$

So,

$$P' = \left(N_{BWP}^{start} + N_{BWP}^{size}\right) \bmod P = (3 + 72) \bmod 4 = 3$$

Where $N_{BWP}^{start}$ represents the serial number 3 corresponding to the first PRB in the BWP, and $N_{BWP}^{size}$ represents the number 72 of PRBs included in the BWP.

3) The size P' of the intermediate RBG in the BWP is determined based on the formula (3), specifically: P' = P = 4.

After determining the size of P', the RBG division may be performed on the BWP accordingly.

For the non-SBFD time-domain unit, as illustrated in FIG. 7, after the RBG size is determined to be P = 8, the RBG division may be performed on the BWP based on the RBG size. The dashed lines in FIG. 7 represent the RBG division boundaries, and P' continuous PRBs on the BWP are divided into one RBG. The value of P' may be determined as follows.

1) The size P' of the first RBG in the BWP is determined based on the formula (1), specifically:

$$P' = P - N_{BWP}^{start} \bmod P = 8 - 3 \bmod 8 = 5$$

Where $N_{BWP}^{start}$ represents the serial number 3 corresponding to the first PRB in the BWP.

2) The size P' of the last RBG in the BWP is determined based on the formula (2).

Specifically, because $\left(N_{BWP}^{start} + N_{BWP}^{size}\right) \bmod P = (3 + 72) \bmod 8 \neq 0$

So,

$$P' = \left(N_{BWP}^{start} + N_{BWP}^{size}\right) \bmod P = (3 + 72) \bmod 8 = 3$$

Where $N_{BWP}^{start}$ represents the serial number 3 corresponding to the first PRB in the BWP, and $N_{BWP}^{size}$ represents the number 72 of PRBs included in the BWP.

3) The size P' of the intermediate RBG in the BWP is determined based on the formula (3), specifically: P' = P = 8.

After determining the size of P', the RBG division may be performed on the BWP accordingly.

Application Example 3

In this application example, the resource block combination is PRG, the first bandwidth is BWP, and the at least two frequency-domain resources are two downlink sub-bands.

An uplink sub-band is arranged in the middle position of the BWP. Accordingly, two downlink sub-bands are formed on both sides of the uplink sub-band. The BWP includes 72 PRBs, of which one uplink subband includes 36 PRBs, and two downlink subbands each include 18 PRBs.

The terminal device acquires a first configuration and a second configuration, the first configuration is a configuration for the SBFD time-domain unit, and the second configuration is a configuration for the non-SBFD time-domain unit. The first configuration may be configured by the higher layer parameter PRG-size1, for example, PRG-size1 may be configured as {2}. The second configuration may be configured by the higher layer parameter PRG-size2, for example, PRG-size2 may be configured as {4}.

In an example, a method in which the terminal device acquires the first configuration and the second configuration may be that the terminal device receives the value of PRG-size1 and the value of PRG size2 transmitted by the network device, for example, the value of the received PRG-size1 is 2 and the value of PRG size2 is 4.

In an example, a method in which the terminal device acquires the first configuration and the second configuration may be that the terminal device receives the value of PRG-size1 and a difference between the PRG size2 and the PRG size1 from the network device, for example, the value of the received PRG-size1 is 2, and the difference between the PRG size2 and the PRG size1 is 2.

In an example, a method in which the terminal device acquires the first configuration and the second configuration may be that the terminal device receives the value of PRG-size1 from the network device, and the terminal device determines the value of PRG-size2 based on a rule. For example, the terminal device determines the value of PRG size2 based on the value of RBG size corresponding to the SBFD time-domain unit, for example, PRG size2 = RBG size. For another example, the ratio of the PRG size2 corresponding to the SBFD time-domain unit to the PRG size1 corresponding to the non-SBFD time-domain unit is equal to the ratio of the RBG size corresponding to the SBFD time-domain unit to the RBG size corresponding to the non-SBFD time-domain unit.

Based on the first configuration {PRG-size1}, the terminal device may determine that the PRG size corresponding to the SBFD time-domain unit is P = 2.

Based on the second configuration {PRG-size2}, the terminal device may determine that the PRG size corresponding to the non-SBFD time-domain unit is P = 4.

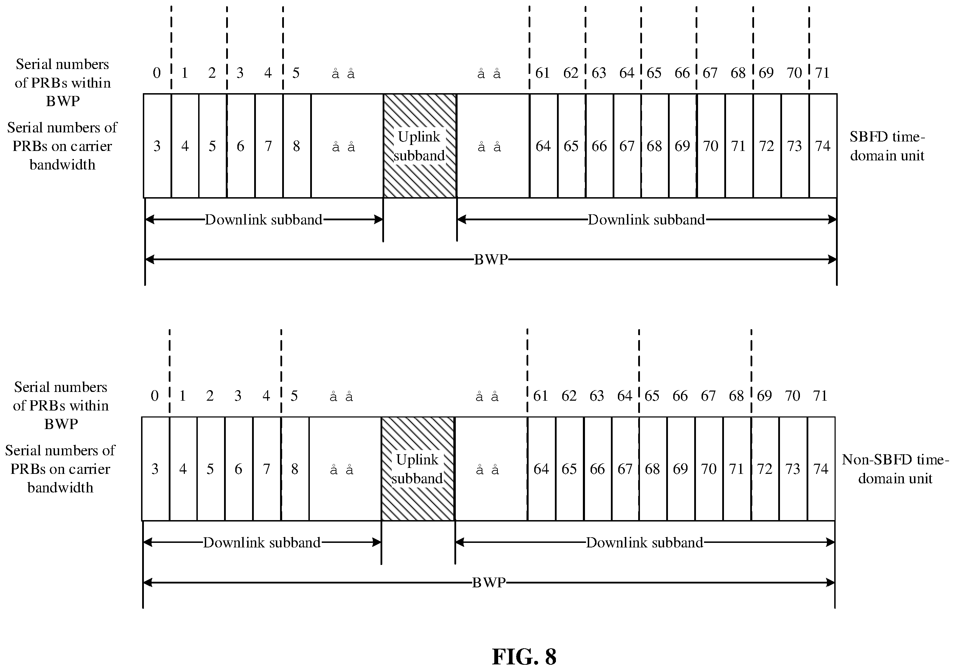

For the SBFD time-domain unit, as illustrated in FIG. 8, after the PRG size is determined to be P = 2, the PRG division may be performed on the BWP based on the PRG size. The dashed lines in FIG. 8 represent the PRG division boundaries, and P' continuous PRBs on the BWP are divided into one PRG. The value of P' may be determined as follows.

1) The size P' of the first PRG in the BWP is determined based on the formula (1), specifically:

$$P' = P - N_{BWP}^{start} \bmod P = 2 - 3 \bmod 2 = 1$$

Where $N_{BWP}^{start}$ represents the serial number 3 corresponding to the first PRB in the BWP.

2) The size P' of the last PRG in the BWP is determined based on the formula (2).

Specifically, because $\left(N_{BWP}^{start} + N_{BWP}^{size}\right) \bmod P = (3 + 72) \bmod 2 \neq 0$

So,

$$P' = \left(N_{BWP}^{start} + N_{BWP}^{size}\right) \bmod P = (3 + 72) \bmod 2 = 1$$

Where $N_{BWP}^{start}$ represents the serial number 3 corresponding to the first PRB in the BWP, and $N_{BWP}^{size}$ represents the number 72 of PRBs included in the BWP.

3) The size P' of the intermediate PRG in the BWP is determined based on the above formula (3), specifically: P' = P = 2.

After determining the size P', the PRG division may be performed on the BWP accordingly.

For the non-SBFD time-domain unit, as illustrated in FIG. 8, the dashed lines in FIG. 8 represent the PRG division boundaries. After the PRG size is determined to be P = 4, the PRG division may be performed on the BWP based on the PRG size, and P' continuous PRBs on the BWP may be divided into one PRG. The value of P' may be determined as follows.

1) The size P' of the first PRG in the BWP is determined based on the formula (1), specifically:

$$P' = P - N_{BWP}^{start} \bmod P = 4 - 3 \bmod 4 = 1$$

Where $N_{BWP}^{start}$ represents the serial number 3 corresponding to the first PRB in the BWP.

2) The size P' of the last PRG in the BWP is determined based on the above formula (2).

Specifically, because $\left(N_{BWP}^{start} + N_{BWP}^{size}\right) \bmod P = (3 + 72) \bmod 4 \neq 0$

So,

$$P' = \left(N_{BWP}^{start} + N_{BWP}^{size}\right) \bmod P = (3 + 72) \bmod 4 = 3$$

Where $N_{BWP}^{start}$ represents the serial number 3 corresponding to the first PRB in the BWP, and $N_{BWP}^{size}$ represents the number 72 of PRBs included in the BWP.

3) The size P' of the intermediate PRG in the BWP is determined based on the formula (3), specifically: P' = P = 4.

After determining the size P', the PRG division may be performed on the BWP accordingly.

Application Example 4

In this application example, the resource block combination is used as subband, the first bandwidth is used as BWP, and the at least two frequency-domain resources are used as two downlink subbands.

An uplink sub-band is arranged in the middle position of the BWP. Accordingly, two downlink sub-bands are formed on both sides of the uplink sub-band. The BWP includes 72 PRBs, of which one uplink sub-band includes 36 PRBs, and both downlink sub-bands each include 18 PRBs.

The subband size is determined based on the frequency-domain resource size (or the sum of bandwidths) of the two downlink subbands and the configuration indicated by the first parameter subbandSize. Assuming that the configuration indicated by the first parameter subbandSize is {value1}, the frequency-domain resource size of the two downlink subbands is 18 + 18 = 36 PRBs, and the subband size may be determined to be P = 4 in combination with the Table 4, where P represents the subband size. It should be noted that the configuration indicated by the first parameter subbandSize here applies to the determination of both the subband size corresponding to the SBFD time-domain unit, and the subband size corresponding to the non-SBFD time-domain unit. The subband size corresponding to the SBFD time-domain unit is determined based on the frequency-domain resource size (or the sum of bandwidths) of the two downlink subbands and the configuration indicated by the first parameter subbandSize in combination with the Table 4. The subband size corresponding to the non-SBFD time-domain unit is determined based on the frequency-domain resource size of the BWP and the configuration indicated by the first parameter subbandSize in combination with the Table 4.

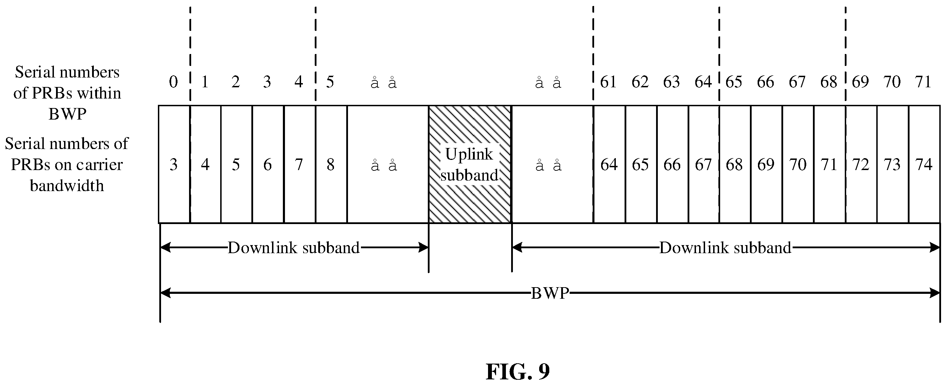

As illustrated in FIG. 9, after the sub-band size is determined to be P = 4, the sub-band division may be performed on the BWP based on the sub-band size. The dashed lines in FIG. 9 represent the sub-band division boundaries, and P' continuous PRBs on the BWP are divided into one sub-band. The value of P' may be determined as follows.

1) The size P' of the first sub-band in the BWP is determined based on the formula (1), specifically:

$$P' = P - N_{BWP}^{start} \bmod P = 4 - 3 \bmod 4 = 1$$

Where $N_{BWP}^{start}$ represents the serial number 3 corresponding to the first PRB in the BWP.

2) The size P' of the last sub-band in the BWP is determined based on the formula (2).

Specifically, because $\left(N_{BWP}^{start} + N_{BWP}^{size}\right) \bmod P = (3 + 72) \bmod 4 \neq 0$

So,

$$P' = \left(N_{BWP}^{start} + N_{BWP}^{size}\right) \bmod P = (3 + 72) \bmod 4 = 3$$

Where $N_{BWP}^{start}$ represents the serial number 3 corresponding to the first PRB in the BWP, and $N_{BWP}^{size}$ represents the number 72 of PRBs included in the BWP.

3) The size P' of the intermediate sub-band in the BWP is determined based on the formula (3), specifically: P' = P = 4.

After the size of P' is determined, the sub-bands division may be performed on the BWP accordingly.

Application Example 5

In this application example, the resource block combination is subband, the first bandwidth is BWP, and the at least two frequency-domain resources are two downlink subbands.

An uplink sub-band is arranged in the middle position of the BWP. Accordingly, two downlink sub-bands are formed on both sides of the uplink sub-band. The BWP includes 72 PRBs, of which one uplink sub-band includes 36 PRBs, and both downlink sub-bands each include 18 PRBs.

The terminal device acquires a first configuration and a second configuration. The first configuration is a configuration for an SBFD time-domain unit, and the second configuration is a configuration for a non-SBFD time-domain unit. The first configuration may be configured by a high-level parameter subbandSize1, and the configuration of subbandSize1 is {value1}. The second configuration may be configured by a high-level parameter subbandSize2, and the configuration of subbandSize2 is {value2}, where value1 represents a value 1 and value2 represents a value 2.

Based on the frequency-domain resource size (72 PRBs) of the BWP and the first configuration {value1}, the terminal device may determine that the subband size corresponding to the time-domain unit of the SBFD is P = 4 in combination with the Table 6-1.

Based on the frequency-domain resource size (72 PRBs) of the BWP and the second configuration {value2}, the terminal device may determine that the subband size corresponding to the non-SBFD time-domain unit is P = 8 in combination with the Table 6-2.

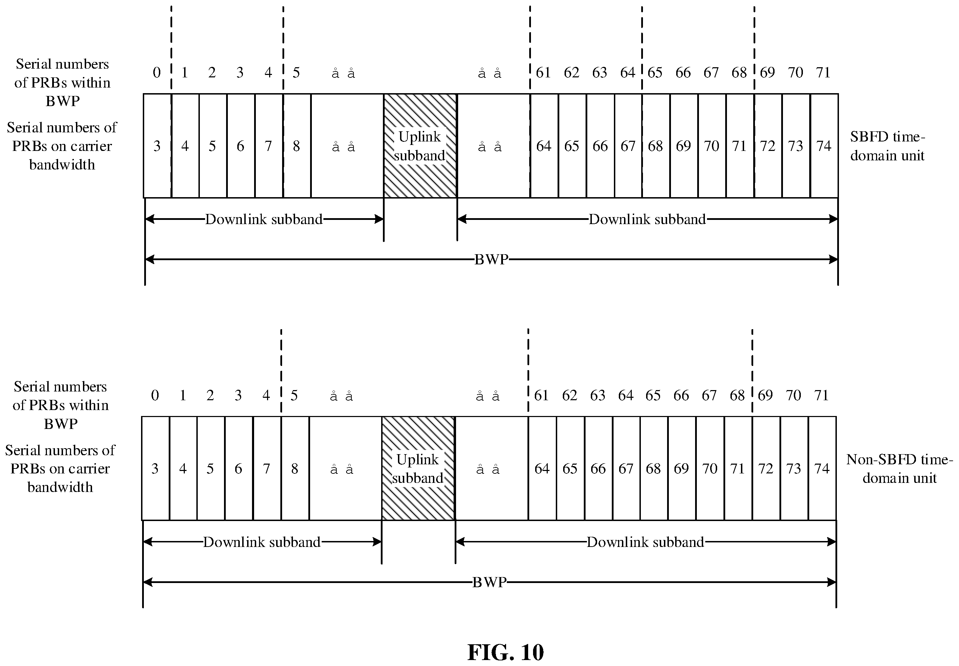

For the SBFD time-domain unit, as illustrated in FIG. 10, after determining the sub-band size as P = 4, the sub-band division may be performed on the BWP based on the sub-band size. The dashed lines in FIG. 10 represent the sub-band division boundaries, and P' continuous PRBs on the BWP are divided into one sub-band. The value of P' may be determined as follows.

1) The size P' of the first sub-band in the BWP is determined based on the formula (1), specifically:

$$P' = P - N_{BWP}^{start} \bmod P = 4 - 3 \bmod 4 = 1$$

Where $N_{BWP}^{start}$ represents the serial number 3 corresponding to the first PRB in the BWP.

2) The size P' of the last sub-band in the BWP is determined based on the formula (2).

Specifically, because $\left(N_{BWP}^{start} + N_{BWP}^{size}\right) \bmod P = (3 + 72) \bmod 4 \neq 0$

So,

$$P' = \left(N_{BWP}^{start} + N_{BWP}^{size}\right) \bmod P = (3 + 72) \bmod 4 = 3$$

Where $N_{BWP}^{start}$ represents the serial number 3 corresponding to the first PRB in the BWP, and $N_{BWP}^{size}$ represents the number 72 of PRBs included in the BWP.

3) The size P' of the intermediate sub-band in the BWP is determined based on the formula (3), specifically: P' = P = 4.

After the size of P' is determined, the sub-bands division may be performed on the BWP accordingly.

For the non-SBFD time-domain unit, as illustrated in FIG. 10, after determining the sub-band size as P = 8, the sub-band division may be performed on the BWP based on the sub-band size. The dashed lines in FIG. 10 represent the sub-band division boundaries, and P' continuous PRBs on the BWP are divided into one sub-band. The value of P' may be determined as follows.

1) The size P' of the first sub-band in the BWP is determined based on the formula (1), specifically:

$$P' = P - N_{BWP}^{start} \bmod P = 8 - 3 \bmod 8 = 5$$

Where $N_{BWP}^{start}$ represents the serial number 3 corresponding to the first PRB in the BWP.

2) The size P' of the last sub-band in the BWP is determined based on the formula (2).

Specifically, because $\left(N_{BWP}^{start} + N_{BWP}^{size}\right) \bmod P = (3 + 72) \bmod 8 \neq 0$

So,

$$P' = \left(N_{BWP}^{start} + N_{BWP}^{size}\right) \bmod P = (3 + 72) \bmod 8 = 3$$

Where $N_{BWP}^{start}$ represents the serial number 3 corresponding to the first PRB in the BWP, and $N_{BWP}^{size}$ represents the number 72 of PRBs included in the BWP.

3) The size P' of the intermediate sub-band in the BWP is determined based on the formula (3), specifically: P' = P = 8.

After the size of P' is determined, the sub-bands division may be performed on the BWP accordingly.

Application Example 6

In this application example, the first bandwidth is BWP, and at least two frequency-domain resources are two downlink sub-bands (downlink sub-band 1 and downlink sub-band 2, respectively).

An uplink sub-band is arranged in the middle position of the BWP, and accordingly, two downlink sub-bands are formed on both sides of the uplink sub-band. The BWP includes 72 PRBs, of which one uplink sub-band includes 36 PRBs, and both downlink sub-bands each include 18 PRBs.

After the resource block combination division is performed on the BWP, N resource block combinations may be obtained. Among the N resource block combinations, K1 resource block combinations fall into the frequency-domain resource 1 and K2 resource block combinations fall into the frequency-domain resource 2.

In K1 resource block combinations, there may be some PRBs in the first resource block combination that do not belong to the frequency-domain resource 1. In this case, the first resource block combination of the frequency-domain resource 1 includes only the PRBs belonging to the frequency-domain resource in the first resource block combination of the K1 resource block combinations. Similarly, in the K1 resource block combinations, there may be some PRBs in the last resource block combination that do not belong to the frequency-domain resource 1. In this case, the last resource block combination of the frequency-domain resource 1 includes only the PRBs belonging to the frequency-domain resource in the last resource block combination of the K1 resource block combinations. Further, the intermediate resource block combinations of the frequency-domain resource 1 are consistent with the intermediate resource block combinations among the K1 resource block combinations described above. Similarly, among the K2 resource block combinations, there may be some PRBs in the first resource block combination that do not belong to the frequency-domain resource 2. In this case, the first resource block combination of the frequency-domain resource 2 includes only the PRBs belonging to the frequency-domain resource in the first resource block combination of the K2 resource block combinations. Similarly, among the K2 resource block combinations, there may be some PRBs in the last resource block combination that do not belong to the frequency-domain resource 2. In this case, the last resource block combination of the frequency-domain resource 2 includes only the PRBs belonging to the frequency-domain resource in the last resource block combination of the K2 resource block combinations. Further, the intermediate resource block combinations of the frequency-domain resource 2 are consistent with the intermediate resource block combinations of the K2 resource block combinations described above.

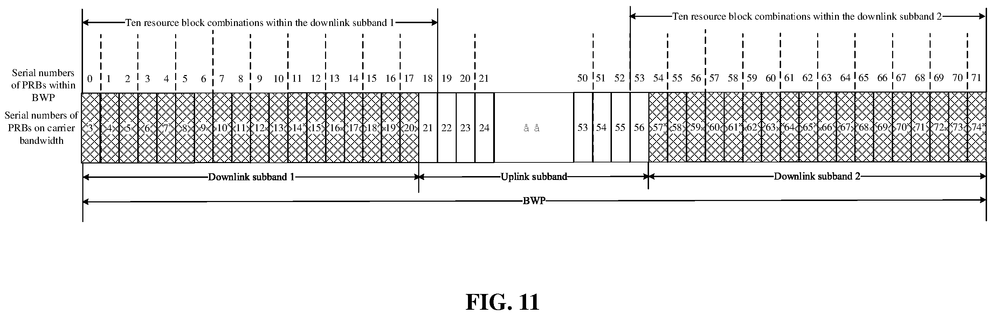

For example, as illustrated in FIG. 11, K1 = 10, after the resource block combination division is performed on the BWP, 10 resource block combinations fall into the frequency-domain resource 1, and the PRB 21 in the last resource block combination of the 10 resource block combinations does not belong to the downlink subband 1, then the last resource block combination of the downlink subband 1 only includes the PRB 20, and other resource block combinations of the downlink subband 1 are consistent with the resource block combinations of the BWP. K2 = 10, after the resource block combination division is performed on the BWP, 10 resource block combinations fall into the frequency-domain resource 2, and the PRB 56 in the first resource block combination of the 10 resource block combinations does not belong to the downlink subband 2, then the first resource block combination of the downlink subband 2 only includes the PRB 57, and other resource block combinations of the downlink subband 2 are consistent with the resource block combinations of the BWP.

The preferred embodiments of the present disclosure have been described in detail above with reference to the accompanying drawings, but the present disclosure is not limited to the specific details in the above-described embodiments. Within the scope of the technical concept of the present disclosure, various simple modifications may be made to the technical solutions of the present disclosure, and these simple modifications all fall within the scope of protection of the present disclosure. For example, various specific technical features described in the above-described detailed description may be combined in any suitable manner without contradiction, and various possible combinations will not be described separately in this disclosure in order to avoid unnecessary repetition. For another example, various embodiments of the present disclosure may be combined arbitrarily, and as long as they do not violate the idea of the present disclosure, they should also be regarded as the contents of the present disclosure. For still another example, on the premise that there is no conflict, each embodiment described in the present disclosure and/or the technical features in each embodiment may be arbitrarily combined with the prior art, and the technical solution obtained after the combination should also fall within the scope of protection of the present disclosure.

It should also be understood that in various method embodiments of the present disclosure, the sequence number of the above-described processes does not mean the sequence of execution, and the sequence of execution of each process should be determined by its function and internal logic, and should not constitute any limitation on the implementation processes of the embodiments of the present disclosure. In addition, in the embodiment of the present disclosure, the terms "downlink", "uplink", and "sidelink" are used to indicate the transmission direction of signals or data, where "downlink" is used to indicate that the transmission direction of signals or data is a first direction transmitted from the site to the user equipment of the cell, "uplink" is used to indicate that the transmission direction of signals or data is a second direction transmitted from the user equipment of the cell to the site, and "sidelink" is used to indicate that the transmission direction of signals or data is a third direction transmitted from the user equipment 1 to the user equipment 2. For example, "downlink signal" indicates that the transmission direction of the signal is the first direction. In addition, in the embodiment of the present disclosure, the term "and/or" only describes an association relationship between association objects, indicating that there may be three relationships, for example, A and/or B, which may indicate three situations in which A exists alone, A and B exist simultaneously, and B exists alone. In addition, the character "/" herein generally indicates that the related objects before and after this character are in an "or" relationship.

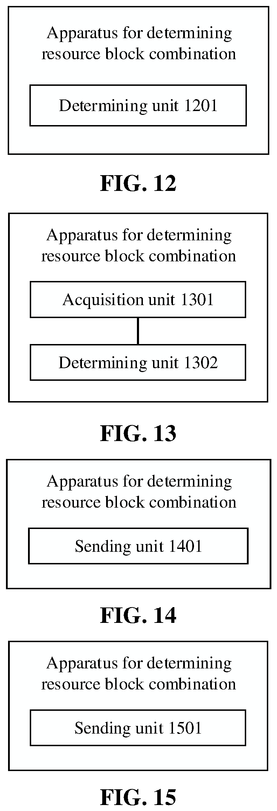

FIG. 12 is a first schematic diagram of the structural composition of an apparatus for determining resource block combination according to an embodiment of the present disclosure. The apparatus is applied to a terminal device. As illustrated in FIG. 12, the apparatus for determining resource block combination includes a determining unit 1201.

The determining unit 1201 is configured to determine a resource block combination size corresponding to a first type of time-domain unit based on at least two frequency-domain resources within a first bandwidth, and the first type of time-domain unit is an SBFD time-domain unit.

In some implementations, the determining unit 1201 is configured to determine a resource block combination size corresponding to a first type of time-domain unit based on a first parameter and a frequency-domain resource size of at least two frequency-domain resources within a first bandwidth, the first parameter is configured to indicate one configuration of at least two configurations, and each configuration of the at least two configurations is configured to determine a resource block combination size corresponding to a respective frequency-domain resource size.

In some implementations, the determining unit 1201 is configured to determine a resource block combination size corresponding to a first type of time-domain unit based on a first parameter, a first frequency-domain resource indication field size, and a frequency-domain resource size of at least two frequency-domain resources within a first bandwidth, and the first frequency-domain resource indication field size is determined based on a frequency-domain resource size of the first bandwidth and the first parameter.

In some implementations, the resource block combination size corresponding to the first type of time-domain unit is a resource block combination size that meets a first condition in a set of resource block combination sizes, and the first condition is that a frequency-domain resource indication field size determined based on the resource block combination size is less than or equal to the first frequency-domain resource indication field size.

In some implementations, if multiple resource block combination sizes in the set of resource block combination sizes meet the first condition, then the resource block combination size corresponding to the first type of time-domain unit is a minimum resource block combination size meeting the first condition.

In some implementations, if a frequency-domain resource indication field size determined based on a first resource block combination size is less than or equal to the first frequency-domain resource indication field size, then the resource block combination size corresponding to the first type of time-domain unit is the first resource block combination size, and the first resource block combination size is determined based on the frequency-domain resource size of the at least two frequency-domain resources and the first parameter. If a frequency-domain resource indication field size determined based on a first resource block combination size is larger than the first frequency-domain resource indication field size, then the resource block combination size corresponding to the first type of time-domain unit is a second resource block combination size, and the second resource block combination size is determined based on the frequency-domain resource size of the first bandwidth and the first parameter.

In some implementations, the determining unit 1201 is configured to determine a size of each resource block combination within the first bandwidth based on the resource block combination size corresponding to the first type of time-domain unit.

In some implementations, the determining unit 1201 is configured to determine the size of each resource block combination within the first bandwidth based on a first serial number, the resource block combination size corresponding to the first type of time-domain unit, and a frequency-domain resource size of the at least two frequency-domain resources. The first serial number is a serial number corresponding to a first PRB within the first bandwidth.

In some implementations, a size of a first resource block combination within the first bandwidth is determined based on the first serial number and the resource block combination size corresponding to the first type of time-domain unit.

In some implementations, if a first value is not equal to zero, a size of a last resource block combination within the first bandwidth is equal to the first value. Alternatively, if a first value is equal to zero, a size of a last resource block combination within the first bandwidth is equal to the resource block combination size corresponding to the first type of time-domain unit. The first value is determined based on the first serial number, a resource block combination size corresponding to the first type of time-domain unit, and a frequency-domain resource size of the first bandwidth.

In some implementations, a size of an intermediate resource block combination within the first bandwidth is equal to the resource block combination size corresponding to the first type of time-domain unit.

In some implementations, if some PRBs in a first resource block combination within the first bandwidth do not belong to the one of the at least two frequency-domain resources, the first resource block combination is adjusted to include only some PRBs belonging to the frequency-domain resource.

In some implementations, the resource block combination is an RBG or a subband.

Those skilled in the art should understand that the related description of the above-described apparatuses for determining resource block combination according to the embodiment of the present disclosure may be understood with reference to the related description of the method for determining resource block combination according to the embodiment of the present disclosure.

FIG. 13 is a second schematic diagram of the structure and composition of an apparatus for determining resource block combination according to an embodiment of the present disclosure. The apparatus is applied to a terminal device. As illustrated in FIG. 13, the apparatus for determining resource block combination includes an acquisition unit 1301 and a determining unit 1302.

The acquisition unit 1301 is configured to acquire a first configuration and/or a second configuration. The first configuration is used to configure a resource block combination size corresponding to a first type of time-domain unit. The second configuration is used to configure a resource block combination size corresponding to a second type of time-domain unit.

The determining unit 1302 is configured to determine the resource block combination size corresponding to the first type of time-domain unit based on the first configuration and/or determine the resource block combination size corresponding to the second type of time-domain unit based on the second configuration, where the first type of time-domain unit is an SBFD time-domain unit and the second type of time-domain unit is a non-SBFD time-domain unit.

In some implementations, the determining unit 1302 is configured to determine the resource block combination size corresponding to the first type of time-domain unit based on a frequency-domain resource size of a first bandwidth and the first configuration. Additionally or alternatively, the determining unit 1302 is configured to determine a resource block combination size corresponding to the second type of time-domain unit based a frequency-domain resource size of a first bandwidth and the second configuration.

In some implementations, the resource block combination is an RBG or a subband.

In some implementations, the resource block combination is a PRG.

In some implementations, the determining unit 1302 is configured to determine a size of each resource block combination within a first bandwidth based on the resource block combination size corresponding to the first type of time-domain unit. Additionally or alternatively, the determining unit 1302 is configured to determine a size of each resource block combination within a first bandwidth based on the resource block combination size corresponding to the second type of time-domain unit.

In some implementations, the determining unit 1302 is configured to determine the size of each resource block combination within the first bandwidth based on a first serial number, the resource block combination size corresponding to the first type of time-domain unit, and a frequency-domain resource size of the at least two frequency-domain resources. The first serial number is a serial number corresponding to a first PRB within the first bandwidth.

In some implementations, the size of the first resource block combination within the first bandwidth is determined based on the first serial number and the resource block combination size corresponding to the first type of time-domain unit.

In some implementations, if a first value is not equal to zero, a size of a last resource block combination within the first bandwidth is equal to the first value. Alternatively, if the first value is equal to zero, a size of a last resource block combination within the first bandwidth is equal to the resource block combination size corresponding to the first type of time-domain unit. The first value is determined based on the first serial number, the resource block combination size corresponding to the first type of time-domain unit, and a frequency-domain resource size of the first bandwidth.

In some implementations, a size of an intermediate resource block combination within the first bandwidth is equal to the resource block combination size corresponding to the first type of time-domain unit.

In some implementations, if some PRBs in a first resource block combination within the first bandwidth do not belong to one of the at least two frequency-domain resources, then the first resource block combination is adjusted to include only some PRBs belonging to the frequency-domain resource.

Those skilled in the art should understand that the related description of the above-described apparatus for determining resource block combination according to the embodiment of the present disclosure may be understood with reference to the related description of the method for determining resource block combination according to the embodiment of the present disclosure.

FIG. 14 is a third schematic diagram of the structure and composition of an apparatus for determining resource block combination according to an embodiment of the present disclosure. The apparatus is applied to a network device. As illustrated in FIG. 14, the resource block combination determining apparatus includes a sending unit 1401.

The sending unit 1401 is configured to perform downlink transmission on a first-type time-domain unit. A resource block combination size corresponding to the first-type time-domain unit is determined based on at least two frequency-domain resources within a first bandwidth, and the first-type time-domain unit is an SBFD time-domain unit.

In some implementations, the resource block combination size corresponding to the first type of time-domain unit is determined based on a first parameter and frequency-domain resource size of at least two frequency-domain resources within the first bandwidth, the first parameter is used to indicate one of at least two configurations, and each of the at least two configurations is used to determine a resource block combination size corresponding to a different frequency-domain resource size.

In some implementations, a resource block combination size corresponding to the first type of time-domain unit is determined based on a first parameter, a first frequency-domain resource indication field size, and a frequency-domain resource size of at least two frequency-domain resources within a first bandwidth, and the first frequency-domain resource indication field size is determined based on a frequency-domain resource size of the first bandwidth and the first parameter.

In some implementations, the resource block combination size corresponding to the first type of time-domain unit is a resource block combination size that meets a first condition in a set of resource block combination sizes, and the first condition is that the frequency-domain resource indication field size determined based on the resource block combination size is less than or equal to the first frequency-domain resource indication field size.

In some implementations, if multiple resource block combination sizes in the set of resource block combination sizes meet the first condition, then the resource block combination size corresponding to the first type of time-domain unit is a minimum resource block combination size meeting the first condition.

In some implementations, if a frequency-domain resource indication field size determined based on a first resource block combination size is less than or equal to the first frequency-domain resource indication field size, then the resource block combination size corresponding to the first type of time-domain unit is the first resource block combination size, and the first resource block combination size is determined based on the frequency-domain resource size of the at least two frequency-domain resources and the first parameter. If a frequency-domain resource indication field size determined based on a first resource block combination size is larger than the first frequency-domain resource indication field size, then the resource block combination size corresponding to the first type of time-domain unit is a second resource block combination size, and the second resource block combination size is determined based on the frequency-domain resource size of the first bandwidth and the first parameter.

In some implementations, a size of each resource block combination within the first bandwidth is determined based on the resource block combination size corresponding to the first type of time-domain unit.

In some implementations, a size of each resource block combination within the first bandwidth is determined based on a first serial number, the resource block combination size corresponding to the first type of time-domain unit, and frequency-domain resource size of the at least two frequency-domain resources. The first serial number is a serial number corresponding to a first PRB within the first bandwidth.

In some implementations, a size of a first resource block combination within the first bandwidth is determined based on the first serial number and the resource block combination size corresponding to the first type of time-domain unit.

In some implementations, if a first value is not equal to zero, a size of a last resource block combination of the first bandwidth is equal to the first value. Alternatively, if a first value is equal to zero, a size of a last resource block combination within the first bandwidth is equal to the resource block combination size corresponding to the first type of time-domain unit. The first value is determined based on the first serial number, the resource block combination size corresponding to the first type of time-domain unit, and a frequency-domain resource size of the first bandwidth.

In some implementations, a size of an intermediate resource block combination within the first bandwidth is equal to the resource block combination size corresponding to the first type of time-domain unit.

In some implementations, if some PRBs in the first resource block combination within the first bandwidth do not belong to one of the at least two frequency-domain resources, then the first resource block combination is adjusted to include only some PRBs belonging to the frequency-domain resource.

In some implementations, the resource block combination is an RBG or a subband.

Those skilled in the art should understand that the related description of the above-described the apparatus for determining resource block combination according to the embodiment of the present disclosure may be understood with reference to the related description of the method for determining resource block combination according to the embodiment of the present disclosure.

FIG. 15 is a fourth schematic diagram of the structure and composition of an apparatus for determining resource block combination according to the embodiment of the present disclosure. The apparatus is applied to a network device. As illustrated in FIG. 15, the apparatus for determining resource block combination includes a sending unit 1501.

The sending unit 1501 is configured to send the first configuration and/or the second configuration. The first configuration is used to configure a resource block combination size corresponding to a first type of time-domain unit, and the second configuration is used to configure a resource block combination size corresponding to a second type of time-domain unit. The first type of time-domain unit is an SBFD time-domain unit, and the second type of time-domain unit is a non-SBFD time-domain unit.

In some implementations, the resource block combination size corresponding to the first type of time-domain unit is determined based on a frequency-domain resource size of a first bandwidth and the first configuration. Additionally or alternatively, the resource block combination size corresponding to the second type of time-domain unit is determined based on a frequency-domain resource size of a first bandwidth and the second configuration.

In some implementations, the resource block combination is an RBG or a subband.

In some implementations, the resource block combination is a PRG.

In some implementations, the resource block combination size corresponding to the first type of time-domain unit and/or the resource block combination size corresponding to the second type of time-domain unit are used to determine a size of each resource block combination within the first bandwidth.

In some implementations, the size of each resource block combination within the first bandwidth is determined based on a first serial number, the resource block combination size corresponding to the first type of time-domain unit, and a frequency-domain resource size of the at least two frequency-domain resources. The first serial number is a serial number corresponding to a first PRB within the first bandwidth.

In some implementations, a size of a first resource block combination within the first bandwidth is determined based on the first serial number and the resource block combination size corresponding to the first type of time-domain unit.

In some implementations, if the first value is not equal to zero, a size of a last resource block combination within the first bandwidth is equal to the first value. Alternatively, if the first value is equal to zero, a size of a last resource block combination within the first bandwidth is equal to a resource block combination size corresponding to the first type of time-domain unit. The first value is determined based on the first serial number, a resource block combination size corresponding to the first type of time-domain unit, and a frequency-domain resource size of the first bandwidth.

In some implementations, a size of an intermediate resource block combination within the first bandwidth is equal to the resource block combination size corresponding to the first type of time-domain unit.

In some implementations, if some PRBs in a first resource block combination within the first bandwidth do not belong to one of at least two frequency-domain resources, then the first resource block combination is adjusted to include only some PRBs belonging to the frequency-domain resource.

Those skilled in the art should understand that the related description of the above-described apparatus for determining resource block combination according to the embodiment of the present disclosure may be understood with reference to the related description of the method for determining resource block combination according to the embodiment of the present disclosure.

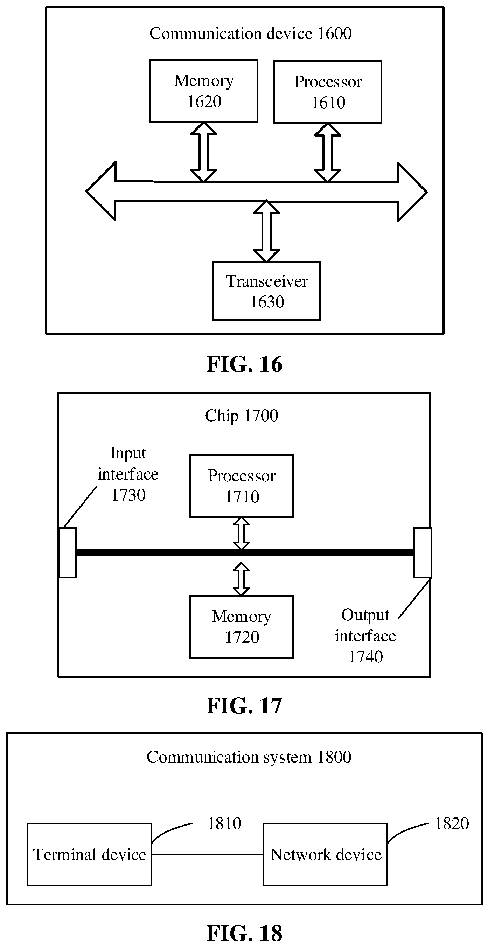

FIG. 16 is a schematic structural diagram of a communication device 1600 according to an embodiment of the present disclosure. The communication device may be a terminal device or a network device. The communication device 1600 illustrated in FIG. 16 includes a processor 1610 that calls and runs a computer program from a memory to perform the method in the embodiment of the present disclosure.

Optionally, as illustrated in FIG. 16, the communication device 1600 may further include a memory 1620. The processor 1610 calls and runs a computer program from the memory 1620 to perform the method in the embodiment of the present disclosure.

The memory 1620 may be a separate device independent of the processor 1610, or may be integrated in the processor 1610.

Optionally, as illustrated in FIG. 16, the communication device 1600 may further include a transceiver 1630. The processor 1610 may control the transceiver 1630 to communicate with other devices. Specifically, the transceiver 1630 may transmit information or data to other devices, or receive information or data transmitted by other devices.

The transceiver 1630 may include a transmitter and a receiver. The transceiver 1630 may further include antennas, and the number of antennas may be one or more.

Optionally, the communication device 1600 may be a network device according to the embodiment of the present disclosure, and the communication device 1600 may implement corresponding processes implemented by the network device in each method according to the embodiment of the present disclosure, and will not be described herein for the sake of brevity.

Optionally, the communication device 1600 may specifically be a mobile terminal/terminal device according to the embodiment of the present disclosure. The communication device 1600 may implement corresponding processes implemented by the mobile terminal/terminal device in various methods according to the embodiments of the present disclosure, and will not be described herein for the sake of brevity.

FIG. 17 is a schematic structural diagram of a chip according to an embodiment of the present disclosure. The chip 1700 illustrated in FIG. 17 includes a processor 1710, which calls and runs a computer program from a memory to perform the methods in the embodiments of the present disclosure.

Optionally, as illustrated in FIG. 17, the chip 1700 may further include a memory 1720. The processor 1710 calls and runs a computer program from the memory 1720 to perform the methods in the embodiments of the present disclosure.

The memory 1720 may be a separate device independent of the processor 1710 or may be integrated in the processor 1710.

Optionally, the chip 1700 may further include an input interface 1730. The processor 1710 may control the input interface 1730 to communicate with other devices or chips. Specifically, the input interface 1730 may acquire information or data transmitted by other devices or chips.

Optionally, the chip 1700 may further include an output interface 1740. The processor 1710 may control the output interface 1740 to communicate with other devices or chips. Specifically, the output interface 1740 may output information or data to other devices or chips.

Optionally, the chip may be applied to the network device in the embodiment of the present disclosure, and the chip may implement the corresponding processes implemented by the network device in various methods of the embodiments of the present disclosure, and will not be repeated here for the sake of brevity.

Optionally, the chip may be applied to the mobile terminal/terminal device in the embodiment of the present disclosure, and the chip may implement the corresponding processes implemented by the mobile terminal/terminal device in various methods of the embodiments of the present disclosure, and will not be repeated here for the sake of brevity.

It should be understood that the chip mentioned in the embodiments of the present disclosure may also be referred to as a system-on-chip, or a system-on-chip chip.

FIG. 18 is a schematic block diagram of a communication system 1800 according to an embodiment of the present disclosure. As illustrated in FIG. 18, the communication system 1800 includes a terminal device 1810 and a network device 1820.

Here, the terminal device 1810 may be used to implement the corresponding functions implemented by the terminal device in the above-described methods, and the network device 1820 may be used to implement the corresponding functions implemented by the network device in the above-described methods, which will not be described herein for the sake of brevity.

It should be understood that the processor of the embodiment of the present disclosure may be an integrated circuit chip having signal processing capabilities. In the implementation process, the operations of the above-described method embodiments may be completed by integrated logic circuits of hardware in the processor or instructions in the form of software. The processor described above may be a general-purpose processor, a digital signal processor (DSP), an application specific integrated circuit (ASIC), a field programmable gate array (FPGA) or other programmable logic device, a discrete gate or transistor logic device, or a discrete hardware component. The methods, operations, and logical block diagrams disclosed in the embodiments of the present disclosure may be implemented or executed. The general-purpose processor may be a microprocessor or the processor may be any conventional processor or the like. The operations of the method disclosed in connection with the embodiments of the present disclosure may be directly embodied as execution by the hardware decoding processor, or may be executed by combining hardware and software modules in the decoding processor. The software module may be located in a storage medium mature in the art, such as random access memory, flash memory, read-only memory, programmable read-only memory, or electrically erasable and writable programmable memory, registers, etc. The storage medium is located in the memory, and the processor reads the information in the memory, and combines its hardware to complete the operations of the above methods.

It is understood that the memory in the embodiments of the present disclosure may be a volatile memory or a non-volatile memory, or may include both the volatile and non-volatile memory. The non-volatile memory may be a read-only memory (ROM), a programmable rom (PROM), an erasable prom (EPROM), an electrically EPROM (EEPROM), or a flash memory. The volatile memory may be a random access memory (RAM), which serves as an external cache. By way of example, but not limitation, many forms of RAM are available, such as static RAM (SRAM), dynamic RAM (DRAM), synchronous DRAM (SDRAM), double data rate SDRAM (DDR SDRAM), enhanced SDRAM (ESDRAM), synchlink DRAM (SLDRAM), and direct rambus RAM (DR RAM). It should be noted that the memory of the systems and methods described herein is intended to include, but is not limited to, these and any other suitable type of memory.

It should be understood that the above memory is illustrative but not limiting. For example, the memory in the embodiments of the present disclosure may also be a static random access memory (SRAM), a dynamic random access memory (DRAM), a synchronous dynamic random access memory (SDRAM), a double data rate synchronous dynamic random access memory (DDR SDRAM), an enhanced SDRAM (ESDRAM), a synch link DRAM (SLDRAM), a direct rambus RAM (DR RAM), and the like. That is, the memory in the embodiments of the present disclosure is intended to include, but is not limited to, these and any other suitable type of memory.

Embodiments of the present disclosure also provide a computer-readable storage medium for storing a computer program.

Optionally, the computer-readable storage medium may be applied to the network device in the embodiment of the present disclosure, and the computer program causes the computer to execute the corresponding flow implemented by the network device in various methods in the embodiments of the present disclosure, and the description thereof will not be repeated here for the sake of brevity.

Optionally, the computer-readable storage medium may be applied to the mobile terminal/terminal device in the embodiment of the present disclosure, and the computer program causes the computer to execute the corresponding flow implemented by the mobile terminal/terminal device in various methods of the embodiments of the present disclosure, and will not be repeatedly described herein for the sake of brevity.

Embodiments of the present disclosure further provide a computer program product including computer program instructions.

Optionally, the computer program product may be applied to the network device in the embodiment of the present disclosure, and the computer program instruction causes the computer to execute the corresponding flow implemented by the network device in various methods in the embodiments of the present disclosure, and the description thereof is not repeated here for the sake of brevity.

Optionally, the computer program product may be applied to the mobile terminal/terminal device in the embodiment of the present disclosure, and the computer program instruction causes the computer to execute the corresponding flow implemented by the mobile terminal/terminal device in various methods of the embodiments of the present disclosure, and will not be repeated here for the sake of brevity.

Embodiments of the present disclosure further provide a computer program.

Optionally, the computer program may be applied to the network device in the embodiment of the present disclosure, and when the computer program is run on the computer, the computer executes the corresponding processes implemented by the network device in various methods of the embodiments of the present disclosure, and the description thereof is not repeated here for the sake of brevity.

Optionally, the computer program may be applied to the mobile terminal/terminal device in the embodiment of the present disclosure, and when the computer program is run on the computer, the computer executes the corresponding flow implemented by the mobile terminal/terminal device in various methods of the embodiments of the present disclosure, which is not repeated here for the sake of brevity.

Those of ordinary skill in the art will appreciate that the elements and algorithmic operations of the various examples described in connection with the embodiments disclosed herein may be implemented in electronic hardware, or a combination of computer software and electronic hardware. Whether these functions are performed in hardware or software depends on the specific application and design constraints of the technical solution. Those skilled in the art may use different methods for implementing the described functions for each particular application, but such implementations should not be considered beyond the scope of the present disclosure.

Those skilled in the art may clearly understand that, for convenience and conciseness of the description, the specific working processes of the systems, devices, and units described above may refer to the corresponding processes in the above-described method embodiments, and will not be repeatedly described herein.

In several embodiments provided herein, it should be understood that the disclosed systems, apparatuses, and methods may be implemented in other ways. For example, the device embodiments described above are merely schematic. For example, the division of units is only a logical function division, and there may be other division methods in actual implementation. For example, multiple units or components may be combined or integrated into another system, or some features may be ignored or not implemented. In addition, the coupling or direct coupling or communication connection between each other shown or discussed may be an indirect coupling or communication connection through some interface, device or unit, which may be electrical, mechanical or otherwise.

The units described as separate components may or may not be physically separate, and the components displayed as units may or may not be physical units. That is, the components may be located in one place or may be distributed over multiple network units. Some or all of the units may be selected based on actual needs to achieve the purpose of the solution of the present embodiment.

In addition, each functional unit in various embodiments of the present disclosure may be integrated in one processing unit, each unit may be physically present alone, or two or more units may be integrated in one unit.

The functions may be stored in a computer-readable storage medium if implemented in the form of software functional units and sold or used as independent products. Based on this understanding, the technical solution of the present disclosure essentially or a part that contributes to the prior art or a part of the technical solution may be embodied in the form of a software product, which is stored in a storage medium and includes several instructions for causing a computer device (which may be a personal computer, a server, or a network device, etc.) to perform all or part of the operations of the methods in various embodiments of the present disclosure. The storage medium includes a USB disk, a removable hard disk, a read-only memory (ROM), a random access memory (RAM), a magnetic disk, or an optical disk that can store a program code.

The forgoings are merely specific embodiments of the present disclosure. However, the scope of protection of the disclosure is not limited thereto. Variations or replacements which can be readily conceived by those skilled in the art within the technical scope disclosed by the disclosure shall fall within the scope of protection of the disclosure. Therefore, the scope of protection of the disclosure shall be determined by the scope of protection of the claims.

**Claims**

1. A method for determining resource block combination, comprising:
determining, by a terminal device, a resource block combination size corresponding to a first type of time-domain unit based on at least two frequency-domain resources within a first bandwidth, wherein the first type of time-domain unit is a sub-band full duplex (SBFD) time-domain unit.

2. The method of claim 1, wherein determining, by the terminal device, the resource block combination size corresponding to the first type of time-domain unit based on the at least two frequency-domain resources within the first bandwidth comprises:
determining, by the terminal device, the resource block combination size corresponding to the first type of time-domain unit based on a first parameter and a frequency-domain resource size of the at least two frequency-domain resources within the first bandwidth, wherein the first parameter is used to indicate one of at least two configurations, and each of the at least two configurations is used to determine a resource block combination size corresponding to a respective frequency-domain resource size.

3. The method of claim 2, wherein determining, by the terminal device, the resource block combination size corresponding to the first type of time-domain unit based on the first parameter and the frequency-domain resource size of the at least two frequency-domain resources within the first bandwidth comprises:
determining, by the terminal device, the resource block combination size corresponding to the first type of time-domain unit based on the first parameter, a first frequency-domain resource indication field size, and the frequency-domain resource size of the at least two frequency-domain resources within the first bandwidth, wherein the first frequency-domain resource indication field size is determined based on a frequency-domain resource size of the first bandwidth and the first parameter.

4. The method of claim 3, wherein the resource block combination size corresponding to the first type of time-domain unit is a resource block combination size that meets a first condition in a set of resource block combination sizes, and the first condition is that a frequency-domain resource indication field size determined based on the resource block combination size is less than or equal to the first frequency-domain resource indication field size.

5. The method of claim 4, wherein if a plurality of resource block combination sizes in the set of resource block combination sizes meet the first condition, then the resource block combination size corresponding to the first type of time-domain unit is a minimum resource block combination size meeting the first condition.

6. The method of claim 3, wherein

if a frequency-domain resource indication field size determined based on a first resource block combination size is less than or equal to the first frequency-domain resource indication field size, then the resource block combination size corresponding to the first type of time-domain unit is the first resource block combination size, and the first resource block combination size is determined based on the frequency-domain resource size of the at least two frequency-domain resources and the first parameter;
if a frequency-domain resource indication field size determined based on a first resource block combination size is larger than the first frequency-domain resource indication field size, then the resource block combination size corresponding to the first type of time-domain unit is a second resource block combination size, and the second resource block combination size is determined based on the frequency-domain resource size of the first bandwidth and the first parameter.

7. The method of any one of claims 1 to 6, further comprising:
determining, by the terminal device, a size of each resource block combination within the first bandwidth based on the resource block combination size corresponding to the first type of time-domain unit.

8. The method of claim 7, wherein determining, by the terminal device, the size of each resource block combination within the first bandwidth based on the resource block combination size corresponding to the first type of time-domain unit comprises:

determining, by the terminal device, the size of each resource block combination within the first bandwidth based on a first serial number, the resource block combination size corresponding to the first type of time-domain unit, and a frequency-domain resource size of the at least two frequency-domain resources, wherein the first serial number is a serial number of a first physical resource block (PRB) within the first bandwidth.

9. The method of claim 8, wherein a size of a first resource block combination within the first bandwidth is determined based on the first serial number and the resource block combination size corresponding to the first type of time-domain unit.

10. The method of claim 8 or 9, wherein

if a first value is not equal to zero, a size of a last resource block combination within the first bandwidth is equal to the first value; or, if a first value is equal to zero, a size of a last resource block combination within the first bandwidth is equal to the resource block combination size corresponding to the first type of time-domain unit, and wherein the first value is determined based on the first serial number, the resource block combination size corresponding to the first type of time-domain unit, and a frequency-domain resource size of the first bandwidth.

11. The method of any one of claims 8 to 10, wherein a size of an intermediate resource block combination within the first bandwidth is equal to the resource block combination size corresponding to the first type of time-domain unit.

12. The method of any one of claims 7 to 11, wherein,

if some PRBs in a first resource block combination within the first bandwidth do not belong to one of the at least two frequency-domain resources, then the first resource block combination is adjusted to include only some PRBs belonging to the frequency-domain resource.

13. The method of any one of claims 1 to 12, wherein the resource block combination is a resource block group (RBG) or a subband.

14. A method for determining resource block combination, comprising:

acquiring, by the terminal device, a first configuration and/or a second configuration, wherein the first configuration is used to configure a resource block combination size corresponding to a first type of time-domain unit, and the second configuration is used to configure a resource block combination size corresponding to a second type of time-domain unit;

determining, by the terminal device, the resource block combination size corresponding to the first type of time-domain unit based on the first configuration, and/or determining, by the terminal device, the resource block combination size corresponding to the second type of time-domain unit based on the second configuration, wherein the first type of time-domain unit is a sub-band full duplex (SBFD) time-domain unit and the second type of time-domain unit is a non-SBFD time-domain unit.

15. The method of claim 14, wherein determining, by the terminal device, the resource block combination size corresponding to the first type of time-domain unit based on the first configuration comprises:

determining, by the terminal device, the resource block combination size corresponding to the first type of time-domain unit based on a frequency-domain resource size of a first bandwidth and the first configuration.

16. The method of claim 14, wherein determining, by the terminal device, the resource block combination size corresponding to the second type of time-domain unit based on the second configuration comprises:

determining the resource block combination size corresponding to the second type of time-domain unit based on a frequency-domain resource size of a first bandwidth and the second configuration.

17. The method of any one of claims 14 to 16, wherein the resource block combination is a resource block group (RBG) or a subband.

18. The method of claim 14, wherein the resource block combination is a precoding resource block group (PRG).

19. The method of any one of claims 14 to 18, further comprising:

determining, by the terminal device, a size of each resource block combination within a first bandwidth based on the resource block combination size corresponding to the first type of time-domain unit; and/or, determining, by the terminal device, a size of each resource block combination within a first bandwidth based on the resource block combination size corresponding to the second type of time-domain unit.

20. The method of claim 19, wherein determining, by the terminal device, the size of each resource block combination within the first bandwidth based on the resource block combination size corresponding to the first type of time-domain unit comprises:
determining, by the terminal device, the size of each resource block combination within the first bandwidth based on a first serial number, the resource block combination size corresponding to the first type of time-domain unit, and a frequency-domain resource size of at least two frequency-domain resources, wherein the first serial number is a serial number of a first physical resource block (PRB) within the first bandwidth.

21. The method of claim 20, wherein a size of a first resource block combination within the first bandwidth is determined based on the first serial number and the resource block combination size corresponding to the first type of time-domain unit.

22. The method of claim 20 or 21, wherein

if a first value is not equal to zero, a size of a last resource block combination within the first bandwidth is equal to the first value; or, if the first value is equal to zero, a size of a last resource block combination within the first bandwidth is equal to the resource block combination size corresponding to the first type of time-domain unit; and wherein the first value is determined based on the first serial number, the resource block combination size corresponding to the first type of time-domain unit, and a frequency-domain resource size of the first bandwidth.

23. The method of any one of claims 20 to 22, wherein a size of an intermediate resource block combination within the first bandwidth is equal to the resource block combination size corresponding to the first type of time-domain unit.

24. The method based on any one of claims 19 to 23, wherein if some PRBs in a first resource block combination within the first bandwidth do not belong to one of the at least two frequency-domain resources, then the first resource block combination is adjusted to include only some PRBs belonging to the frequency-domain resources.

25. A method for determining resource block combination, comprising:
performing, by a network device, downlink transmission on a first type time-domain unit, wherein a resource block combination size corresponding to the first type time-domain unit is determined based on at least two frequency-domain resources within a first bandwidth, and the first type time-domain unit is a sub-band full duplex (SBFD) time-domain unit.

26. The method of claim 25, wherein the resource block combination size corresponding to the first type of time-domain unit is determined based on a first parameter and frequency-domain resource size of the at least two frequency-domain resources within the first bandwidth, the first parameter is used to indicate one of at least two configurations, and each of the at least two configurations is used to determine a resource block combination size corresponding to a respective frequency-domain resource size.

27. The method of claim 26, wherein the resource block combination size corresponding to the first type of time-domain unit is determined based on the first parameter, a first frequency-domain resource indication field size, and the frequency-domain resource size of the at least two frequency-domain resources within the first bandwidth, and the first frequency-domain resource indication field size is determined based on a frequency-domain resource size of the first bandwidth and the first parameter.

28. The method of claim 27, wherein the resource block combination size corresponding to the first type of time-domain unit is a resource block combination size that meets a first condition in a set of resource block combination sizes, and the first condition is that a frequency-domain resource indication field size determined based on the resource block combination size is less than or equal to the first frequency-domain resource indication field size.

29. The method of claim 28, wherein if a plurality of resource block combination sizes in the resource block combination size set meet the first condition, then the resource block combination size corresponding to the first type of time-domain unit is a minimum resource block combination size meeting the first condition.

30. The method of claim 27, wherein

if a frequency-domain resource indication field size determined based on a first resource block combination size is less than or equal to the first frequency-domain resource indication field size, then the resource block combination size corresponding to the first type of time-domain unit is the first resource block combination size, and the first resource block combination size is determined based on the frequency-domain resource size of the at least two frequency-domain resources and the first parameter;
if a frequency-domain resource indication field size determined based on a first resource block combination size is larger than the first frequency-domain resource indication field size, then the resource block combination size corresponding to the first type of time-domain unit is a second resource block combination size, and the second resource block combination size is determined based on the frequency-domain resource size of the first bandwidth and the first parameter.

31. The method of any one of claims 25 to 30, wherein a size of each resource block combination within the first bandwidth is determined based on the resource block combination size corresponding to the first type of time-domain unit.

32. The method of claim 31, wherein the size of each resource block combination within the first bandwidth is determined based on a first serial number, the resource block combination size corresponding to the first type of time-domain unit, and frequency-domain resource size of the at least two frequency-domain resources, wherein the first serial number is a serial number of a first physical resource block (PRB) within the first bandwidth.

33. The method of claim 32, wherein a size of a first resource block combination within the first bandwidth is determined based on the first serial number and the resource block combination size corresponding to the first type of time-domain unit.

34. The method of claim 32 or 33, wherein

if a first value is not equal to zero, a size of a last resource block combination of the first bandwidth is equal to the first value; or, if a first value is equal to zero, a size of a last resource block combination within the first bandwidth is equal to the resource block combination size corresponding to the first type of time-domain unit, and
wherein the first value is determined based on the first serial number, the resource block combination size corresponding to the first type of time-domain unit, and a frequency-domain resource size of the first bandwidth.

35. The method of any one of claims 32 to 34, wherein a size of an intermediate resource block combination within the first bandwidth is equal to the resource block combination size corresponding to the first type of time-domain unit.

36. The method of any one of claims 31 to 35, wherein if some PRBs in a first resource block combination within the first bandwidth do not belong to one of the at least two frequency-domain resources, then the first resource block combination is adjusted to include only some PRBs belonging to the frequency-domain resources.

37. The method of any one of claims 25 to 36, wherein the resource block combination is a resource block group (RBG) or a subband.

38. A method for determining resource block combination, comprising:

sending, by a network device, a first configuration and/or a second configuration, wherein the first configuration is used to determine a resource block combination size corresponding to a first type of time-domain unit, the second configuration is used to determine a resource block combination size corresponding to a second type of time-domain unit, the first type of time-domain unit is a sub-band full duplex (SBFD) time-domain unit, and the second type of time-domain unit is a non-SBFD time-domain unit.

39. The method of claim 38, wherein

the resource block combination size corresponding to the first type of time-domain unit is determined based on a frequency-domain resource size of a first bandwidth and the first configuration, and/or

the resource block combination size corresponding to the second type of time-domain unit is determined based on a frequency-domain resource size of a first bandwidth and the second configuration.

40. The method of claim 38 or 39, wherein the resource block combination is a resource block group (RBG) or a subband.

41. The method of claim 38, wherein the resource block combination is a precoding resource block group (PRG).

42. The method of any one of claims 38 to 41, wherein the resource block combination size corresponding to the first type of time-domain unit and/or the resource block combination size corresponding to the second type of time-domain unit are used to determine a size of each resource block combination within a first bandwidth.

43. The method of claim 42, wherein the size of each resource block combination within the first bandwidth is determined based on a first serial number, the resource block combination size corresponding to the first type of time-domain unit, and a frequency-domain resource size of at least two frequency-domain resources, wherein the first serial number is a serial number of a first physical resource block (PRB) within the first bandwidth.

44. The method of claim 43, wherein a size of a first resource block combination within the first bandwidth is determined based on the first serial number and the resource block combination size corresponding to the first type of time-domain unit.

45. The method of claim 43 or 44, wherein,

if a first value is not equal to zero, a size of a last resource block combination within the first bandwidth is equal to the first value; or, if the first value is equal to zero, a size of a last resource block combination within the first bandwidth is equal to a resource block combination size corresponding to the first type of time-domain unit; and wherein the first value is determined based on the first serial number, the resource block combination size corresponding to the first type of time-domain unit, and a frequency-domain resource size of the first bandwidth.

46. The method of any one of claims 43 to 45, wherein a size of an intermediate resource block combination within the first bandwidth is equal to the resource block combination size corresponding to the first type of time-domain unit.

47. The method of any one of claims 42 to 46, wherein if some PRBs in a first resource block combination within the first bandwidth do not belong to one of at least two frequency-domain resources, then the first resource block combination is adjusted to include only some PRBs belonging to the frequency-domain resources.

48. An apparatus for determining resource block combination, applied to a terminal device, the apparatus comprising: a determining unit, configured to determine a resource block combination size corresponding to a first type of time-domain unit based on at least two frequency-domain resources within a first bandwidth, wherein the first type of time-domain unit is a sub-band full duplex (SBFD) time-domain unit.

49. An apparatus for determining resource block combination, applied to a terminal device, the apparatus comprising:

an acquisition unit, configured to acquire a first configuration used to configure a resource block combination size corresponding to a first type of time-domain unit and/or a second configuration used to configure a resource block combination size corresponding to a second type of time-domain unit; a determining unit, configured to determine a resource block combination size corresponding to a first type of time-domain unit based on the first configuration and/or determine a resource block combination size corresponding to a second type of time-domain unit based on the second configuration, wherein the first type of time-domain unit is a sub-band full duplex (SBFD) time-domain unit and the second type of time-domain unit is a non-SBFD time-domain unit.

50. An apparatus for determining resource block combination, applied to a network device, the apparatus comprising: a sending unit, configured to perform downlink transmission on a first type time-domain unit, wherein a resource block combination size corresponding to the first type time-domain unit is determined based on at least two frequency-domain resources within a first bandwidth, and the first type time-domain unit is a sub-band full duplex (SBFD) time-domain unit.

51. An apparatus for determining resource block combination, applied to a network device, comprising:

a sending unit, configured to send a first configuration and/or a second configuration, wherein the first configuration is used to configure a resource block combination size corresponding to a first type of time-domain unit, the second configuration is used to configure a resource block combination size corresponding to a second type of time-domain unit, the first type of time-domain unit is a sub-band full duplex (SBFD) time-domain unit, and the second type of time-domain unit is a non-SBFD time-domain unit.

52. A terminal device comprising: a processor and a memory for storing a computer program, wherein the processor invokes and executes the computer program stored in the memory to cause the terminal device to perform the method of any one of claims 1 to 13 or the method of any one of claims 14 to 24.

53. A network device comprising: a processor and a memory for storing a computer program, wherein the processor invokes and executes the computer program stored in the memory to cause the network device to perform the method of any one of claims 25 to 37 or the method of any one of claims 38 to 47.

54. A chip comprising: a processor for invoking and executing a computer program from a memory to cause a device on which the chip is installed to perform the method of any one of claims 1 to 13, or the method of any one of claims 14 to 24, or the method of any one of claims 25 to 37, or the method of any one of claims 38 to 47.

55. A computer-readable storage medium for storing a computer program that causes a computer to perform the method of any one of claims 1 to 13, or the method of any one of claims 14 to 24, or the method of any one of claims 25 to 37, or the method of any one of claims 38 to 47.

56. A computer program product, comprising computer program instructions that cause a computer to perform the method of any one of claims 1 to 13, or the method of any one of claims 14 to 24, or the method of any one of claims 25 to 37, or the method of any one of claims 38 to 47.

57. A computer program that causes a computer to perform the method of any one of claims 1 to 13, or the method of any one of claims 14 to 24, or the method of any one of claims 25 to 37, or the method of any one of claims 38 to 47.

100

130

110

120

110

**FIG. 1**

Frequency
domain

TDD

SBFD

Downlink

→

Downlink

Uplink

Downlink

Time domain

**FIG. 2**

A terminal device determines a resource block combination size
corresponding to a first type of time-domain unit based on at least two
frequency-domain resources within a first bandwidth, the first type of
time-domain unit is a sub-band full duplex (SBFD) time-domain unit

301

**FIG. 3**

| Network device | | Terminal device |
|---|---|---|

401: Perform downlink transmission on a first type of time-domain unit, a resource block combination size corresponding to the first type of time-domain unit is determined based on at least two frequency-domain resources within a first bandwidth

**FIG. 4**

| Network device | | Terminal device |
|---|---|---|

501: Send first configuration and/or second configuration

502: Acquire the first configuration and/or the second configuration, the first configuration is used to configure a resource block combination size corresponding to the first type of time-domain unit, the second configuration is used to configure a resource block combination size corresponding to the second type of time-domain unit

**FIG. 5**

Serial numbers
of PRBs within
BWP

| 0 | 1 | 2 | 3 | 4 | 5 | å å | | å å | 61 | 62 | 63 | 64 | 65 | 66 | 67 | 68 | 69 | 70 | 71 |

Serial numbers of
PRBs on carrier
bandwidth

| 3 | 4 | 5 | 6 | 7 | 8 | å å | Uplink subband | å å | 64 | 65 | 66 | 67 | 68 | 69 | 70 | 71 | 72 | 73 | 74 |

Downlink subband ← → Downlink subband

BWP

**FIG. 6**

Serial numbers
of PRBs within
BWP

0 | 1 | 2 | 3 | 4 | 5 | å å | å å | 61 | 62 | 63 | 64 | 65 | 66 | 67 | 68 | 69 | 70 | 71

Serial numbers of
PRBs on carrier
bandwidth

| 3 | 4 | 5 | 6 | 7 | 8 | å å | Uplink subband | å å | 64 | 65 | 66 | 67 | 68 | 69 | 70 | 71 | 72 | 73 | 74 |

←——Downlink subband——→ ←——————Downlink subband——————→

←————————————————BWP————————————————→

SBFD time-
domain unit

Serial numbers
of PRBs within
BWP

0 | 1 | 2 | 3 | 4 | 5 | å å | å å | 61 | 62 | 63 | 64 | 65 | 66 | 67 | 68 | 69 | 70 | 71

Serial numbers of
PRBs on carrier
bandwidth

| 3 | 4 | 5 | 6 | 7 | 8 | å å | Uplink subband | å å | 64 | 65 | 66 | 67 | 68 | 69 | 70 | 71 | 72 | 73 | 74 |

←——Downlink subband——→ ←——————Downlink subband——————→

←————————————————BWP————————————————→

Non-SBFD time-
domain unit

**FIG. 7**

EP 4 761 159 A1

Serial numbers of PRBs within BWP

0　1　2　3　4　5　　à　à　　　à　à　　61　62　63　64　65　66　67　68　69　70　71

Serial numbers of PRBs on carrier bandwidth

| 3 | 4 | 5 | 6 | 7 | 8 | à à | Uplink subband | à à | 64 | 65 | 66 | 67 | 68 | 69 | 70 | 71 | 72 | 73 | 74 |

SBFD time-domain unit

←—Downlink subband—→　←————————Downlink subband————————→

←————————————————BWP————————————————→

Serial numbers of PRBs within BWP

0　1　2　3　4　5　　à　à　　　à　à　　61　62　63　64　65　66　67　68　69　70　71

Serial numbers of PRBs on carrier bandwidth

| 3 | 4 | 5 | 6 | 7 | 8 | à à | Uplink subband | à à | 64 | 65 | 66 | 67 | 68 | 69 | 70 | 71 | 72 | 73 | 74 |

Non-SBFD time-domain unit

←—Downlink subband—→　←————————Downlink subband————————→

←————————————————BWP————————————————→

**FIG. 8**

**FIG. 9**

EP 4 761 159 A1

**FIG. 10**

**FIG. 11**

EP 4 761 159 A1

Apparatus for determining
resource block combination

Determining unit 1201

**FIG. 12**

Apparatus for determining
resource block combination

Acquisition unit 1301

Determining unit 1302

**FIG. 13**

Apparatus for determining
resource block combination

Sending unit 1401

**FIG. 14**

Apparatus for determining
resource block combination

Sending unit 1501

**FIG. 15**

Communication device 1600

Memory
1620

Processor
1610

Transceiver
1630

**FIG. 16**

Chip 1700

Input
interface
1730

Processor
1710

Memory
1720

Output
interface
1740

**FIG. 17**

Communication system 1800

1810

1820

Terminal device

Network device

**FIG. 18**

## INTERNATIONAL SEARCH REPORT

| International application No. |
|---|
| **PCT/CN2023/112367** |

### A. CLASSIFICATION OF SUBJECT MATTER

H04L5/00(2006.01)i

According to International Patent Classification (IPC) or to both national classification and IPC

### B. FIELDS SEARCHED

Minimum documentation searched (classification system followed by classification symbols)

IPC:H04W,H04L,H04Q

Documentation searched other than minimum documentation to the extent that such documents are included in the fields searched

Electronic data base consulted during the international search (name of data base and, where practicable, search terms used)

CNKI, VEN, EXTXTC, WPABS, CNTXT, 3GPP: 大小, 全双工, 时域, 频域, 子带, frequency, Rbg, SBFD, size, subbandsize, time domain, subband non-overlapping full duplex

### C. DOCUMENTS CONSIDERED TO BE RELEVANT

| Category* | Citation of document, with indication, where appropriate, of the relevant passages | Relevant to claim No. |
|---|---|---|
| X | CN 115804052 A (QUALCOMM INC.) 14 March 2023 (2023-03-14) description, paragraphs 74 and 115-117 | 14-19, 38-42, 49, 51-57 |
| A | CN 115804052 A (QUALCOMM INC.) 14 March 2023 (2023-03-14) description, paragraphs 74 and 115-117 | 1-13, 20-37, 43-48, 50 |
| A | WILUS INC. "Discussion on subband non-overlapping full duplex" *3GPP TSG RAN WG1 #112bis-e, R1-2303830*, 26 April 2023 (2023-04-26), entire document | 1-57 |
| A | WILUS INC. "Discussion on subband non-overlapping full duplex" *3GPP TSG RAN WG1 #112, R1-2301732*, 03 March 2023 (2023-03-03), entire document | 1-57 |
| A | CN 116506960 A (SPREADTRUM SEMICONDUCTOR (NANJING) CO., LTD.) 28 July 2023 (2023-07-28) entire document | 1-57 |
| A | US 2021377938 A1 (QUALCOMM INC.) 02 December 2021 (2021-12-02) entire document | 1-57 |

☑ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **25 April 2024** | **06 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/112367** |

**C.      DOCUMENTS CONSIDERED TO BE RELEVANT**

| Category* | Citation of document, with indication, where appropriate, of the relevant passages | Relevant to claim No. |
| --- | --- | --- |
| A | WO 2023116809 A1 (HUAWEI TECHNOLOGIES CO., LTD.) 29 June 2023 (2023-06-29) entire document | 1-57 |

Form PCT/ISA/210 (second sheet) (July 2022)

**INTERNATIONAL SEARCH REPORT**
**Information on patent family members**

International application No.

**PCT/CN2023/112367**

| Patent document cited in search report | | | Publication date (day/month/year) | Patent family member(s) | | | Publication date (day/month/year) |
|---|---|---|---|---|---|---|---|
| CN | 115804052 | A | 14 March 2023 | WO | 2022015848 | A1 | 20 January 2022 |
| | | | | US | 2023239851 | A1 | 27 July 2023 |
| | | | | EP | 4183089 | A1 | 24 May 2023 |
| CN | 116506960 | A | 28 July 2023 | WO | 2023134606 | A1 | 20 July 2023 |
| US | 2021377938 | A1 | 02 December 2021 | EP | 4158834 | A1 | 05 April 2023 |
| | | | | WO | 2021242931 | A1 | 02 December 2021 |
| | | | | TW | 202147902 | A | 16 December 2021 |
| | | | | CN | 115398850 | A | 25 November 2022 |
| WO | 2023116809 | A1 | 29 June 2023 | CN | 116346546 | A | 27 June 2023 |

Form PCT/ISA/210 (patent family annex) (July 2022)